(19) Europäisches Patentamt
European Patent Office
Office européen des brevets

(11) **EP 4 614 352 A1**

(12) **EUROPEAN PATENT APPLICATION**
published in accordance with Art. 153(4) EPC

(43) Date of publication:
**10.09.2025 Bulletin 2025/37**

(21) Application number: **23896927.3**

(22) Date of filing: **01.12.2023**

(51) International Patent Classification (IPC):
**G06F 16/587** (2019.01)    **G06T 11/60** (2006.01)
**H04M 1/72439** (2021.01)

(52) Cooperative Patent Classification (CPC):
**G06F 16/587; G06F 16/78; G06F 16/787;
G06T 11/60; H04L 67/52; H04M 1/72439;
H04M 1/72457**

(86) International application number:
**PCT/CN2023/135798**

(87) International publication number:
**WO 2024/114785 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2022 CN 202211538437**

(71) Applicant: **Huawei Technologies Co., Ltd.
Shenzhen, Guangdong 518129 (CN)**

(72) Inventors:
• **ZHU, Guanwen
  Shenzhen, Guangdong 518129 (CN)**
• **ZHANG, Yanfen
  Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **IMAGE PROCESSING METHOD, ELECTRONIC DEVICE, AND SYSTEM**

(57)     This application provides an image processing method, an electronic device, and a system. The method includes: A terminal device obtains a target time period in response to a user operation; the terminal device obtains an image captured in the target time period to obtain a first image set; the terminal device obtains location information of the image in the first image set; the terminal device obtains location information of the terminal device in the target time period, where the location information of the terminal device includes a first location point, and the location information of the image does not include the first location point; the terminal device obtains a second image set, where the second image set includes a first image corresponding to the first location point; the terminal device generates a third image set, where the third image set includes the image in the first image set and an image in the second image set; and the terminal device displays the third image set. According to embodiments of this application, a personalized requirement of a user for image processing can be met, and user experience can be improved.

FIG. 3

## Description

This application claims priority to Chinese Patent Application No. 202211538437.1, filed with the China National Intellectual Property Administration on December 2, 2022 and entitled "IMAGE PROCESSING METHOD, ELECTRONIC DEVICE, AND SYSTEM", which is incorporated herein by reference in its entirety.

## TECHNICAL FIELD

Embodiments of this application relate to the field of electronic technologies, and in particular, to an image processing method, an electronic device, and a system.

## BACKGROUND

With development of terminal technologies, more users use terminal devices to create image sets, and record or share their lives through the image sets. For example, the user may synthesize, based on a function provided by an application (for example, Gallery) on the terminal device, images locally stored in the terminal device into a collage or a video, and then the user may share the collage or the video.

Currently, the image set is usually generated based on images captured by the user. Once the user does not take a photo for storage in some scenarios, the generated image set cannot completely reflect a life record of the user, and user experience is poor.

## SUMMARY

This application provides an image processing method, an electronic device, and a system. According to the method, an image corresponding to location information other than location information of an image captured by a terminal device in location information of the terminal device may be obtained, and the image and the image captured by the terminal device are synthesized to obtain an image set, so that a personalized requirement of a user for image processing can be met, and user experience can be improved.

According to a first aspect, an embodiment of this application provides an image processing method. The method includes: A terminal device obtains a target time period in response to a user operation; the terminal device obtains an image captured in the target time period, to obtain a first image set; the terminal device obtains location information of an image in the first image set; the terminal device obtains location information of the terminal device in the target time period, where the location information of the terminal device includes a first location point, and the location information of the image does not include the first location point; the terminal device obtains a second image set, where the second image set includes a first image corresponding to the first location point; the terminal device generates a third image set, where the third image set includes an image in the first image set and an image in the second image set; and the terminal device displays the third image set.

In this embodiment of this application, the terminal device may obtain, in response to the user operation, an image corresponding to location information other than the location information of the image captured by the terminal device in the location information of the terminal device in the target time period, and synthesize the image and the image captured by the terminal device, to obtain the third image set. According to embodiments of this application, a personalized requirement of a user for image processing can be met, and user experience can be improved.

With reference to the first aspect, in a possible implementation, the location information of the image includes a second location point, and the first image set includes a second image corresponding to the second location point. The method further includes: The terminal device determines time information of the first image based on time information of the first location point; the terminal device determines time information of the second image based on time information of the second location point. That the terminal device generates a third image set includes: The terminal device generates the third image set based on the time information of the first image and the time information of the second image.

In this embodiment of this application, the terminal device may synthesize the image in the first image set and the image in the second image set based on time information of the image in the first image set and time information of the image in the second image set, to obtain the third image set. According to the method, the third image set is generated in a time sequence, so that user experience can be improved.

With reference to the first aspect, in a possible implementation, the time information of the first image is before the time information of the second image, and a location of the first image is before a location of the second image in the third image set.

In this embodiment of this application, the terminal device arranges the images in the image set in a time sequence, and the arrangement sequence conforms to a time sequence, so that user experience can be improved.

With reference to the first aspect, in a possible implementation, the third image set is a collage or a video.

With reference to the first aspect, in a possible implementation, the third image set is a road map.

With reference to the first aspect, in a possible implementation, the first image is a landmark image corresponding to the first location point.

With reference to the first aspect, in a possible implementation, the method further includes: The terminal device obtains a first material corresponding to the first location point, where the first material includes at least one of a landmark name, a text introduction, and geographic information. That the terminal device generates a third image set includes: The terminal device generates the third image set based on the image in the first image set, the image in the second image set, and the first material.

In this embodiment of this application, the terminal device may obtain materials of some or all images in the second image set, to display the materials when displaying the third image set. This can enrich content of the third image set, and improve user experience.

With reference to the first aspect, in a possible implementation, the method further includes: The terminal device obtains a second material corresponding to a third location point, where the second material includes at least one of a landmark image, a landmark name, a text introduction, and geographic information. That the terminal device generates a third image set includes: The terminal device generates the third image set based on the image in the first image set, the image in the second image set, and the second material.

In this embodiment of this application, the terminal device may obtain materials of some or all images in the first image set, to display the materials when displaying the third image set. This can enrich content of the third image set, and improve user experience.

With reference to the first aspect, in a possible implementation, the method further includes: The terminal device edits an image in the third image set in response to a user operation on the third image set; and the terminal device displays the edited third image set.

In this embodiment of this application, after generating the third image set, the terminal device may edit the image in the third image set in response to a user operation, for example, delete an image or add a text. According to the method, content of the third image set can be changed based on personalized selection of a user, thereby improving user experience.

With reference to the first aspect, in a possible implementation, the obtaining a second image set includes: The terminal device sends an obtaining request to a server, where the obtaining request includes the location information of the image and indication information indicating the target time period; and the terminal device receives a response message sent by the server, where the response message includes the second image set.

In this embodiment of this application, the second image set may be obtained by the server and then sent to the terminal device. In this method, power consumption of the terminal device can be reduced, and calculation efficiency can be improved.

With reference to the first aspect, in a possible implementation, the method further includes: The terminal device determines a theme of the second image set based on a user operation of theme selecting, where the first image is associated with the theme.

In this embodiment of this application, the terminal device may determine the theme in response to the user operation, and further obtain the second image set and the third image set associated with the theme. The method can meet a personalized requirement of the user.

With reference to the first aspect, in a possible implementation, the first image is an image corresponding to a first landmark, the first landmark is determined based on a distance between the first location point and at least one landmark, and the at least one landmark includes the first landmark.

In this embodiment of this application, the first image is an image corresponding to the first landmark, and the first landmark is determined based on a distance. This can ensure correlation between the first image and the first location point, and improve accuracy of the first image.

With reference to the first aspect, in a possible implementation, the first image is an image corresponding to the first landmark, the first landmark is determined based on a stay time of the terminal device at at least one location point, and the at least one location point includes the first location point.

In this embodiment of this application, the first image is the image corresponding to the first landmark, and the first landmark is determined based on the stay time of the first location point. This can ensure correlation between the first image and the first location point, and improve accuracy of the first image.

According to a second aspect, an embodiment of this application provides an image processing method. The method includes: A server receives an obtaining request sent by a terminal device, where the obtaining request includes location information of an image in a first image set and indication information indicating a target time period, and the first image set includes an image captured by the terminal device in the target time period; the server obtains location information of the terminal device in the target time period, where the location information of the terminal device includes a first location point, and the location information of the image does not include the first location point; the server obtains a second image set based on the location information of the terminal device, the indication information, and the location information of the image; and the server sends the second image set to the terminal device, where the second image set includes a first image corresponding to the first location point, and the second image set is used to be combined with the first image set to synthesize a third image set.

With reference to the second aspect, in a possible implementation, the method further includes: The server determines time information of the first image based on time information of the terminal device at the first location point; and the server sends the time information of the first image to the terminal device.

With reference to the second aspect, in a possible implementation, the second image set includes a first material corresponding to the first location point, and the method further includes: The server determines a first landmark based on the first location point; the server obtains a material corresponding to the first landmark, to obtain the first material corresponding to the first image, where the first material includes at least one of a landmark name, a text introduction, and geographic information; and the server sends the first material to the terminal device, where the third image set is generated based on an image in the first image set, an image in the second image set, and the first material.

With reference to the second aspect, in a possible implementation, the location information of the image includes a second location point, and the method further includes: The server determines a second landmark based on the second location point; the server obtains a material corresponding to the second landmark, to obtain a second material corresponding to the second location point, where the second material includes at least one of a landmark image, a landmark name, a text introduction, and geographic information; and the server sends the second material to the terminal device, where the third image set is generated based on the image in the first image set, the image in the second image set, and the second material.

With reference to the second aspect, in a possible implementation, the obtaining request includes a theme of the second image set, and the obtaining a second image set includes: The server determines at least one landmark based on the first location point; the server determines the first landmark from the at least one landmark based on at least one of an association relationship between the theme and the at least one landmark, a distance between the first location point and the at least one landmark, and a stay time of the terminal device at the first location point; and the server obtains an image corresponding to the first landmark, to obtain the first image.

According to a third aspect, an embodiment of this application provides an image processing device. The device includes:

an obtaining unit, configured to: in response to a user operation, obtain a target time period; obtain an image captured in the target time period, to obtain a first image set; obtain location information of the image in the first image set; obtain location information of a terminal device in the target time period, where the location information of the terminal device includes a first location point, the location information of the image does not include the first location point; and obtain a second image set, where the second image set includes a first image corresponding to the first location point; a synthesis unit, configured to generate a third image set, where the third image set includes the image in the first image set and an image in the second image set; and a display unit, configured to display the third image set.

With reference to the third aspect, in a possible implementation, the location information of the image includes a second location point, the first image set includes a second image corresponding to the second location point, and the device further includes a determining unit. The determining unit is configured to determine time information of the first image based on time information of the first location point, and determine time information of the second image based on time information of the second location point.

The synthesis unit is specifically configured to generate the third image set based on the time information of the first image and the time information of the second image.

With reference to the third aspect, in a possible implementation, the time information of the first image is before the time information of the second image, and a location of the first image is before a location of the second image in the third image set.

With reference to the third aspect, in a possible implementation, the third image set is a collage or a video.

With reference to the third aspect, in a possible implementation, the first image is a landmark image corresponding to the first location point.

With reference to the third aspect, in a possible implementation, the obtaining unit is further configured to obtain a first material corresponding to the first location point, where the first material includes at least one of a landmark name, a text introduction, and geographic information.

The generation unit is specifically configured to generate the third image set based on the image in the first image set, the image in the second image set, and the first material.

With reference to the third aspect, in a possible implementation, the location information of the image includes a third location point, and the obtaining unit is further configured to obtain a second material corresponding to the third location point, where the second material includes at least one of a landmark image, a landmark name, a text introduction, and geographic information.

The generation unit is specifically configured to generate the third image set based on the image in the first image set, the image in the second image set, and the second material.

With reference to the third aspect, in a possible implementation, the device further includes an editing unit. The editing unit is configured to edit an image in the third image set in response to a user operation on the third image set.

The display unit is further configured to display the edited third image set.

With reference to the third aspect, in a possible implementation, the obtaining unit is specifically configured to: send an obtaining request to a server, where the obtaining request includes the location information of the image and indication information indicating the target time period; and receive a response message sent by the server, where the response message includes the second image set.

With reference to the third aspect, in a possible implementation, the determining unit is further configured to determine a theme of the second image set based on a user operation of theme selecting, where the first image is associated with the theme.

With reference to the third aspect, in a possible implementation, the first image is an image corresponding to a first landmark, the first landmark is determined based on a distance between the first location point and at least one landmark, and the at least one landmark includes the first landmark.

With reference to the third aspect, in a possible implementation, the first image is the image corresponding to the first landmark, the first landmark is determined based on a stay time of the terminal device at at least one location point, and the at least one location point includes the first location point.

According to a fourth aspect, this application provides an electronic device. The electronic device may include a memory and a processor. The memory may be configured to store a computer program. The processor may be configured to invoke the computer program, so that the electronic device performs the method according to the first aspect or any one of the possible implementations of the first aspect.

According to a fifth aspect, this application provides an electronic device. The electronic device may include a memory and a processor. The memory may be configured to store a computer program. The processor may be configured to invoke the computer program, so that the electronic device performs the method according to the second aspect or any one of the possible implementations of the second aspect.

According to a sixth aspect, this application provides a computer program product including instructions. When the computer program product runs on an electronic device, the electronic device is enabled to perform the method according to the first aspect or any one of the possible implementations of the first aspect.

According to a seventh aspect, this application provides a computer program product including instructions. When the computer program product runs on an electronic device, the electronic device is enabled to perform the method according to the second aspect or any one of the possible implementations of the second aspect.

According to an eighth aspect, this application provides a computer-readable storage medium, including instructions. When the instructions are run on an electronic device, the electronic device is enabled to perform the method according to the first aspect or any one of the possible implementations of the first aspect.

According to a ninth aspect, this application provides a computer-readable storage medium, including instructions. When the instructions are run on an electronic device, the electronic device is enabled to perform the method according to the second aspect or any one of the possible implementations of the second aspect.

According to a tenth aspect, an embodiment of this application provides an image processing system. The image processing system includes a terminal device and a server. The terminal device is the electronic device described in the fourth aspect, and the server is the electronic device described in the fifth aspect.

It may be understood that the apparatuses provided in the third aspect, the fourth aspect, and the fifth aspect, the electronic devices provided in the sixth aspect and the seventh aspect, and the computer-readable storage media provided in the eighth aspect and the ninth aspect are all configured to perform the methods provided in embodiments of this application. Therefore, for beneficial effect that can be achieved, refer to beneficial effect in corresponding methods. Details are not described herein again.

**BRIEF DESCRIPTION OF DRAWINGS**

FIG. 1 is a diagram of an architecture of an image processing system according to an embodiment of this application;
FIG. 2A is a diagram of a hardware structure of an electronic device 100 according to an embodiment of this application;
FIG. 2B is a block diagram of a software structure of an electronic device 100 according to an embodiment of this application;
FIG. 3 is a schematic flowchart of an image processing method according to an embodiment of this application;

FIG. 4A and FIG. 4B show user interfaces implemented on a terminal device according to an embodiment of this application;

FIG. 5 is a diagram of an image stored on a terminal device according to an embodiment of this application;

FIG. 6 is a diagram of determining a target location point according to an embodiment of this application;

FIG. 7 is a schematic flowchart of a method for determining a target landmark based on a target location point according to an embodiment of this application;

FIG. 8A is a diagram of determining a to-be-processed landmark according to an embodiment of this application;

FIG. 8B is a diagram of determining a target landmark according to an embodiment of this application;

FIG. 9 is a diagram of determining an image corresponding to a target landmark according to an embodiment of this application;

FIG. 10 is a diagram of a response message according to an embodiment of this application;

FIG. 11 is a road map of a target user according to an embodiment of this application;

FIG. 12 is a diagram of determining an image arrangement sequence according to an embodiment of this application;

FIG. 13 is a diagram of comparison between collages according to an embodiment of this application;

FIG. 14A and FIG. 14B show examples of some user interfaces for displaying an image set by a terminal device according to an embodiment of this application; and

FIG. 15 is a flowchart of a method for obtaining materials of N location points according to an embodiment of this application.

## DESCRIPTION OF EMBODIMENTS

Technical solutions according to embodiments of this application are clearly and completely described in the following with reference to accompanying drawings. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

To describe an image processing method provided in embodiments of this application more clearly and in detail, the following first describes an image processing system provided in embodiments of this application.

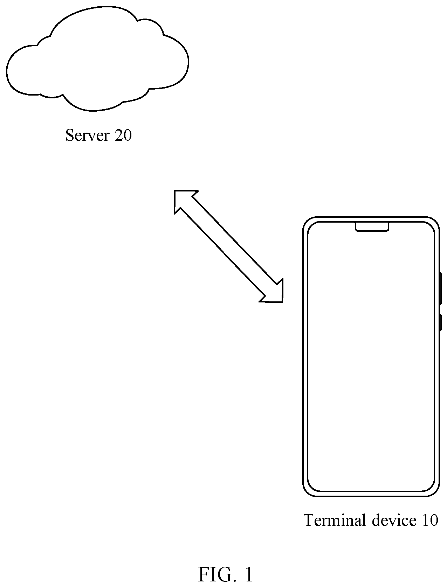

FIG. 1 is a diagram of an architecture of an image processing system according to an embodiment of this application. As shown in FIG. 1, the system includes a terminal device 10 and a server 20.

In some embodiments, when detecting a first user operation, the terminal device 10 may obtain, in response to the first user operation, an image captured in a target time period from locally stored images; obtain a shooting location corresponding to each captured image, to obtain N location points; and further send an obtaining request to the server 20, where the obtaining request includes the N location points. The obtaining request is used to request a landmark image corresponding to a location point that a target user passes through other than the N location points in the target time period, and N is an integer not less than 0. The first user operation is used to indicate to generate an image set of the target user in the target time period.

Further, the server 20 may obtain, in response to the obtaining request, M location points that the target user passes through in the target time period, where M is an integer not less than N; screen out the N location points from the M location points, to obtain a target location point; and determine a target landmark based on the target location point. Further, the server 20 may send a response message to the terminal device 10, where the response message includes an image corresponding to the target landmark. Finally, the terminal device 10 may synthesize the image captured in the target time period from the locally stored images and the image corresponding to the target landmark, to obtain the image set.

The server 20 may also be referred to as a location platform. The server 20 may be one server, or may be a server cluster including a plurality of servers. This is not limited herein.

For example, the server 20 may include a location platform processor 201, a point of interest (Point of Interest, POI) material database 202, a POI location database 203, and a user location database 204. The location platform processor 201, the POI material database 202, the POI location database 203, and the user location database 204 may be different servers.

The location platform processor 201 is configured to determine the image corresponding to the target landmark. The location platform processor 201 may exchange data with the terminal device 10, the POI material database 202, the POI location database 203, and the user location database 204, for example, receive a crowd-sourced signal (for example, an obtaining request in the following description) of the terminal device 10, or obtain the image corresponding to the target landmark from the POI material database 202 and send the image to the terminal device 10. The POI material database 202 is configured to store POI materials, including information such as a POI name, a POI image, a POI category, a POI description, and a POI longitude and latitude. The POI location database 203 is configured to store at least one POI and a geographical location (for example, longitude and latitude information) of the POI. The user location database 204 is configured to store location data of a user reported by the terminal device 10. For example, after receiving an upload instruction of the user, the terminal device 10 uploads information like a geographical location obtained via a global positioning system (global positioning system, GPS) location sensor to the user location database 204. The location data of the user may include a location identifier, a geographical location (longitude and latitude information), and a happen time (HappenTime) of the geographical location.

In some embodiments, Gallery is installed on the terminal device 10, and the terminal device 10 may display an application interface of Gallery. The application interface may include a setting option, for example, a target time period or a theme. Further, when detecting a user operation performed on the application interface, the terminal device 10 sends a message instruction to a central controller of the terminal device 10 through an application layer of the terminal device 10. The message instruction may include a target time period, a theme, and the like. Further, the central controller of the terminal device 10 may send the obtaining request to the location platform processor 201. The obtaining request is used to request the landmark image corresponding to the location point that the target user passes through other than the N location points in the target time period. N is an integer not less than 0.

After receiving the obtaining request, the location platform processor 201 may send a query instruction to the user location database 204. The query instruction may include a user identifier in the target time period and the target time period.

The user location database 204 queries a location point that meets the user identifier and the target time period in the query instruction, to obtain the M location points; and sends the M location points to the location platform processor 201. M is an integer not less than N.

The location platform processor 201 may select, from the M location points, a location point (that is, the target location point) that is not among the N location points. The location platform processor 201 sends a first obtaining instruction to the location platform POI location database 203, where the first obtaining instruction includes the target location point.

The POI location database 203 determines the target landmark from the at least one POI based on the target location point in response to the first obtaining instruction, and further sends a second obtaining instruction to the location platform POI material database 202, where the second obtaining instruction is used to obtain a material of the target landmark.

The POI material database 202 queries the material of the target landmark in response to the second obtaining instruction, where the material may include the image (a POI image of the target landmark) corresponding to the target landmark, a POI name, a POI category, a POI description, a POI longitude and latitude, and time information (for example, a time at which the target user is located at the target location point) of the target landmark. Further, the material of the target landmark is sent to the location platform processor 201.

The location platform processor 201 sends the material of the target landmark to the terminal device. Further, the terminal device 10 generates the image set based on the material of the target landmark and a material (an image, a shooting time, a theme, location data, and the like) from the locally stored images in the target time period.

The terminal device 10 may be a mobile phone, a tablet computer, a desktop computer, a laptop computer, a handheld computer, a notebook computer, an ultra-mobile personal computer (ultra-mobile personal computer, UMPC), a netbook, or the like. An example embodiment of the terminal device 10 includes but is not limited to a portable electronic device using iOS®, Android®, Harmony®, Windows®, Linux, or another operating system. The terminal device 10 may alternatively be another portable electronic device like a laptop (Laptop).

In some other embodiments, the system may further include a vehicle and/or a wearable device. The vehicle and/or the wearable device are/is configured to: collect the location data of the user, and send the location data of the target user to the terminal device 10 or the server 20. The wearable device may be a device like a smartwatch, a smart band, or smart glasses. For example, the target user may wear the wearable device. The wearable device may collect the location data. Further, in response to a user operation of sending the collected location data to the terminal device 10, the wearable device establishes a communication connection to the terminal device 10, and sends the collected location data to the terminal device 10.

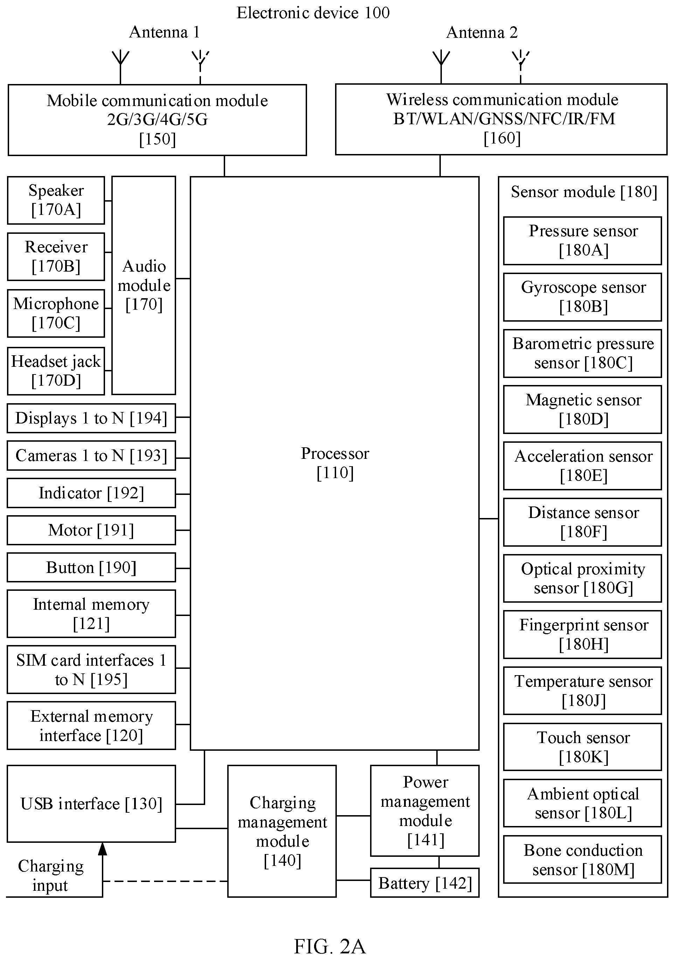

FIG. 2A is a diagram of a hardware structure of an electronic device 100.

For example, the terminal device 10 shown in FIG. 1 may be the electronic device 100 below.

The electronic device 100 is used as an example below to describe embodiments in detail. It should be understood that, the electronic device 100 may have more or fewer components than those shown in the figure, or a combination of two or more components, or an arrangement of different components. The various components shown in the figure may be implemented in hardware, software, or a combination of hardware and software including one or more signal processing circuits and/or application-specific integrated circuits.

The electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The SIM interface may be configured to communicate with the SIM card interface 195, to implement a function of transmitting data to an SIM card or reading data in an SIM card.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer a detected touch operation to the application processor to determine a touch event type. A visual output related to the touch operation may be provided through the display 194. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive an input of the button, and generate a button signal input related to a user setting and function control of the electronic device 100.

The motor 191 may generate a vibration prompt. The motor 191 may be configured to provide an incoming call vibration prompt and touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication.

In this embodiment, the electronic device 100 may perform the image processing method by using the processor 110, and the display 194 displays an image set and a related interface that are obtained by using the image processing method.

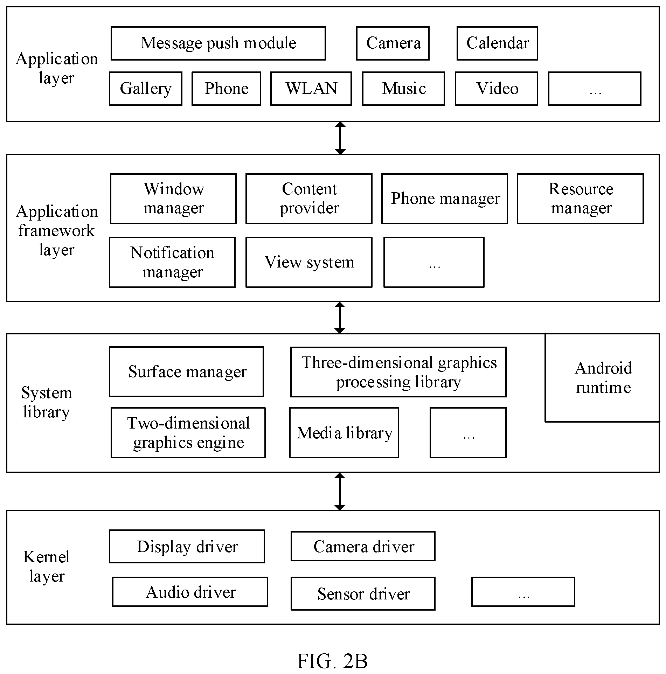

FIG. 2B is a block diagram of a software structure of an electronic device 100 according to an embodiment of this application.

In a layered architecture, software is divided into several layers, and each layer has a clear role and task. The layers communicate with each other through a software interface. In some embodiments, the system is divided into four layers: an application layer, an application framework layer, a runtime (runtime) and system library, and a kernel layer from top to bottom.

The application layer may include a series of application packages.

As shown in FIG. 2B, the application layer further includes a message push module. The application packages may include application programs (which may also be referred to as applications) such as Camera, Gallery, Calendar, Phone, Map, Navigation, WLAN, Bluetooth, Music, Videos, and Messages.

In this embodiment of this application, the terminal device may display a related application interface of Gallery. For example, the related application interface includes a first application interface and a second application interface, and the first application interface may provide a related control with a function of synthesizing images. Further, in response to a user operation performed on the related control, the terminal device may send an obtaining request to a server to obtain an image corresponding to a target landmark, and generate an image set based on the image corresponding to the target landmark. Further, the terminal device displays a second application interface, where the second user interface is used to display the image set. For a specific implementation process, refer to related descriptions below. Details are not described herein.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, hang-up, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively display a notification in a form of a chart or a scroll bar text in a status bar at the top of the system, for example, a notification of an application run in the background, or may display a notification in a form of a dialog interface on the screen. For example, text information is displayed in the status bar, an alert tone is made, the electronic device vibrates, or an indicator blinks.

The runtime (runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of two-dimensional (2-Dimensional, 2D) and three-dimensional (3-Dimensional, 3D) layers to a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

The following describes in detail the image processing method provided in embodiments of this application based on the diagram of the image processing system shown in FIG. 1 and the diagrams of the hardware and software structures of the electronic device shown in FIG. 2A and FIG. 2B.

It should be noted that, in embodiments of this application, a user operation may be a touch operation (for example, a tap operation, a touch and hold operation, a slide-up operation, a slide-down operation, or a side-slide operation) of a user, or may be a non-contact operation (for example, an air gesture), or may be a voice instruction of a user. This is not specifically limited in embodiments of this application.

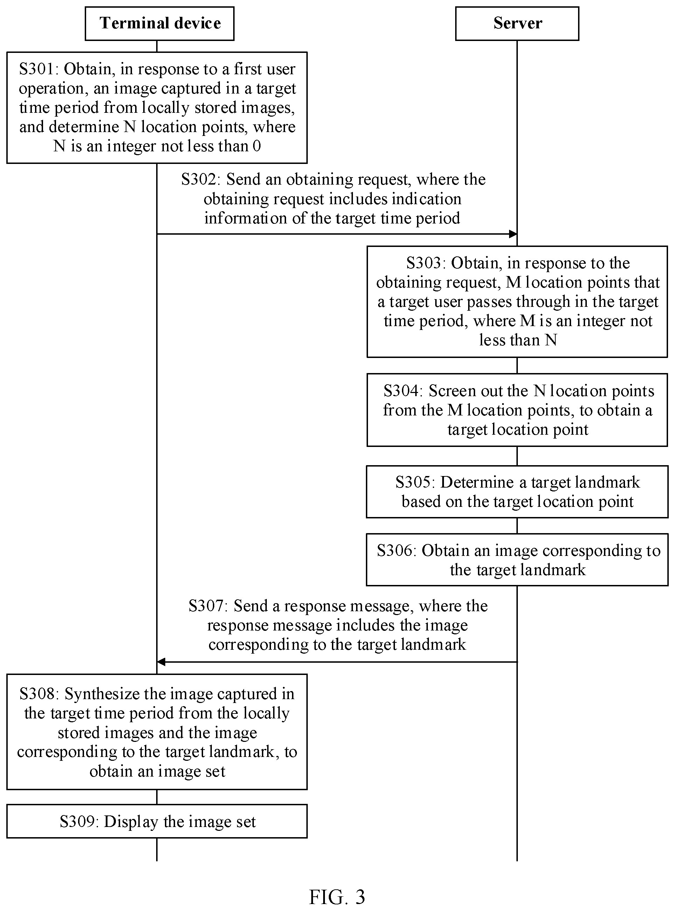

FIG. 3 shows an example of a procedure of an image processing method according to an embodiment of this application. The image processing method may include some or all of the following steps.

Step S301: A terminal device obtains, in response to a first user operation, an image captured in a target time period **from locally stored images,** and determines N location points, where N is an integer not less than 0.

The first user operation is used to indicate to generate an image set of a target user in the target time period. A form of the image set may be a collage, a video, or the like. The location point may be a geographical location point determined based on a longitude and a latitude.

In some embodiments, the terminal device may obtain, in response to the first user operation, the image captured in the target time period from the locally stored images, and further obtain a shooting location corresponding to each image captured in the target time period, to obtain the N location points.

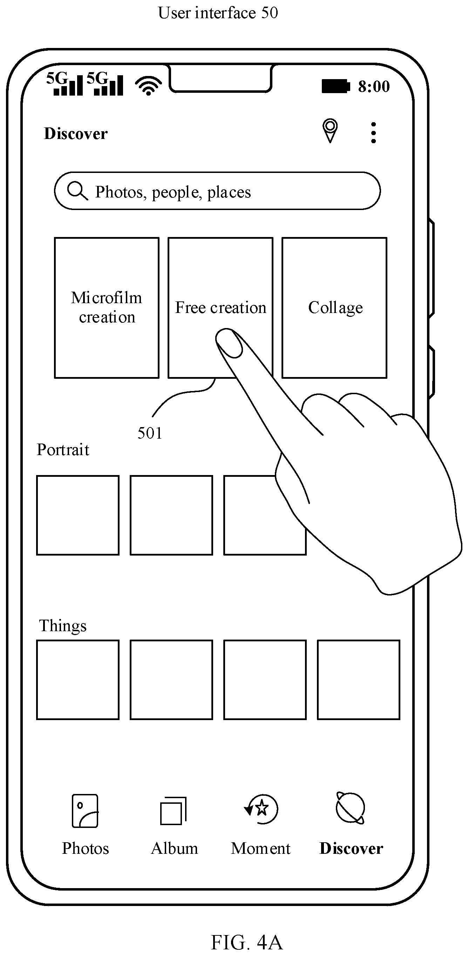

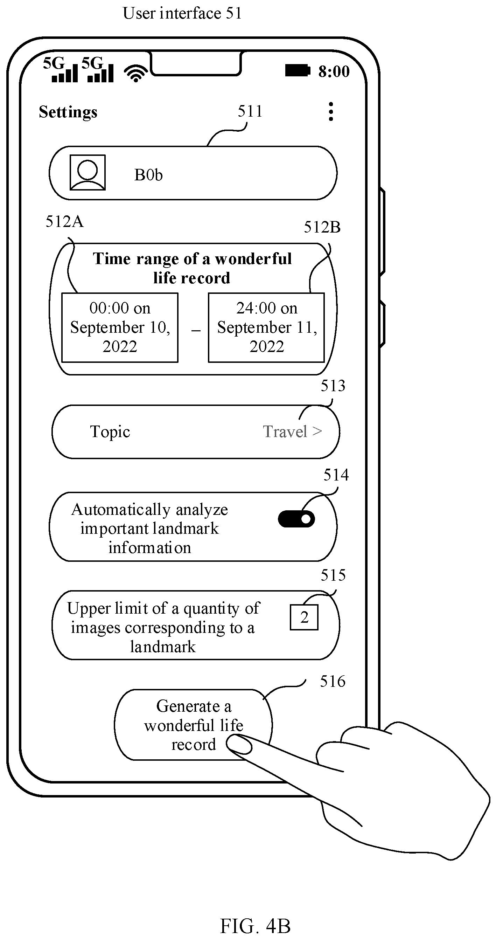

For example, FIG. 4A and FIG. 4B show some user interfaces implemented on the terminal device according to an embodiment of this application.

FIG. 4A shows an example of a user interface 50 of a Gallery application according to an embodiment of this application. The user interface 50 may include a control 501. As shown in FIG. 4A, when detecting a user operation on the control 501, the terminal device may display, in response to the user operation, a user interface 51 shown in FIG. 4B.

The user interface 51 may include a user information bar 511, a start time bar 512A, an end time bar 512B, a theme control 513, a landmark add control 514, a quantity control 515, and a generation control 516.

The user information bar 511 is used to display a user identifier. The start time bar 512A is used to enter a start time of the target time period. The end time bar 512B is used to enter an end time of the target time period. The theme control 513 is used to determine a theme of the image set. The landmark add control 514 is used to enable or disable a function of adding an image corresponding to a target landmark in a process of generating the image set, where the target landmark is a landmark corresponding to a location point that the target user passes through other than the N location points in the target time period. The quantity control 515 is used to enter an upper limit of a quantity of images corresponding to one landmark. The generation control 516 is used to generate an image set.

For example, the user may enter "BOb" in the user information bar 511, enter 0:00 on September 10, 2022 in the start time bar 512A, enter 0:00 on September 11, 2022 in the end time bar 512B, enter Travel in the theme control 513, enable a function corresponding to the landmark add control 514, enter 2 in the quantity control 515, and finally tap the generation control 516. Correspondingly, in response to the user operations, the terminal device determines that the user identifier of the target user is "BOb", the target time period is 0:00 on September 10, 2022 to 0:00 on September 11, 2022, the theme is Travel, and the upper limit of the quantity of images corresponding to one landmark is Travel. Further, the N location points are determined based on an image captured from 0:00 on September 10, 2022 to 0:00 on September 11, 2022 from the locally stored images, and then step S302 is performed.

It should be noted that, if the user does not enable the function corresponding to the landmark add control 514, the terminal device does not perform step S301, and the terminal device may generate the image set based on the image captured in the target time period from the locally stored images.

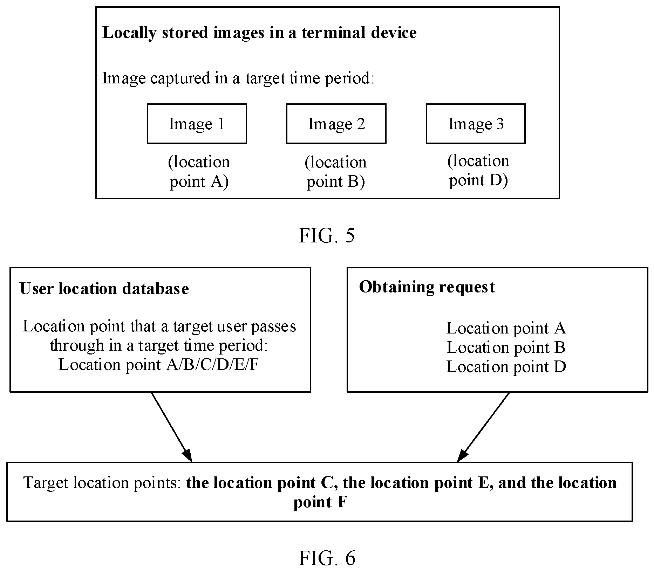

For example, in response to the first user operation, the terminal device queries for the image captured in the target time period from the locally stored images. Found images may be shown in FIG. 5, that is, an image 1, an image 2, and an image 3. A shooting location corresponding to the image 1 is a location point A, a shooting location corresponding to the image 2 is a location point B, and a shooting location corresponding to the image 3 is a location point D. In this case, the terminal device may determine the location point A, the location point B, and the location point D as the N location points.

Step S302: The terminal device sends an obtaining request to a server, where the obtaining request includes indication information of the target time period, and the indication information is used to obtain another location point that the target user passes through in the target time period.

The landmark image corresponding to the another location point may be the image corresponding to the target landmark determined based on the another location point.

Optionally, the obtaining request may further include the N location points.

In addition, the obtaining request may not include the N location points, and the N location points may be separately sent by the terminal device to the server. For example, the terminal device may send a location message to the server, where the location message includes the N location points.

Optionally, the obtaining request may further include task information. The task information may include at least one of the user identifier of the target user, the upper limit of the quantity of images corresponding to the landmark, and the theme. The user identifier indicates identity information of the target user. For example, the user identifier may be a user account or user code. For example, the user identifier may be a user account for logging in to Gallery. The upper limit of the quantity of images is used to limit a quantity of images corresponding to one landmark. The theme is used to determine a content attribute of the image set. For example, the theme may include travel, office, and the like.

The upper limit of the quantity of images and the theme may be selected by the user. For example, the terminal device may display a related user interface (for example, the user interface 51), and determine, in response to a selection operation (for example, a user operation on the theme control 513 and the quantity control 515) performed by the user on the related user interface, the upper limit of the quantity of images and the theme that are selected by the user. Further, when the first user operation (for example, a user operation on the generation control 516) performed on the related user interface is detected, the obtaining request is sent to the server. The obtaining request includes the upper limit of the quantity of images corresponding to the landmark and the theme.

For example, the obtaining request may include the user identifier (UsrId) of the target user, the target time period (TimeRange), the upper limit of the quantity of images corresponding to the landmark (MaxNumOfPicturesForEachLandMark), the theme (SharedTheme), the indication information (AutoAnalyseImportantLandmark), and the N location points (AllLocationsListForLocalPictures). The indication information indicates to request the landmark image corresponding to the another location point that the target user passes through other than the N location points in the target time period. The location point may include a location point identifier (Id), a longitude (Lon), a latitude (Lat), and a shooting time (ShootingTime).

**Step S303: The server obtains, in response to the obtaining request, M location points that the target user passes through in the target time period, where M is an integer not less than N.**

In some embodiments, the obtaining request may include the user identifier of the target user. The server may obtain, from a user location database 204 based on the user identifier, a geographical location that the target user passes through in the target time period, to obtain the M location points. M is an integer not less than N.

The user location database 204 is used to store a geographical location of the user, and the geographical location of the user may be uploaded by the user to the user location database 204 via an electronic device. For example, if the target user enables, on the electronic device like a mobile phone or a wearable device, a function of storing the geographical location in the cloud, the electronic device may collect the geographical location of the target user, and then may periodically or in real time upload the geographical location of the target user to the user location database 204 located in the cloud. An implementation method for obtaining the geographical location of the target user by the electronic device may be that the electronic device records the location of the user, or the electronic device obtains the geographical location through collection via an application in the electronic device. This is not limited herein.

In some other embodiments, if the obtaining request includes the M location points that the target user passes through in the target time period, the server may obtain the M location points from the obtaining request.

**Step S304: The server screens out the N location points from the M location points, to obtain a target location point.**

In some embodiments, the server may screen out the N location points from the M location points to obtain M-N location points, and determine the M-N location points as the target location point.

FIG. 6 is a diagram of determining the target location point according to an embodiment of this application. As shown in FIG. 6, the M location points that the target user passes through in the target time period and that are obtained by the server from the user location database 204 are six location points: a location point A, a location point B, a location point C, a location point D, a location point E, and a location point F. The N location points obtained by the server from the obtaining request are three location points: the location point A, the location point B, and the location point D. Further, the server may screen out the three location points from the six location points, to obtain target location points: the location point C, the location point E, and the location point F.

In some other embodiments, the server may screen out the N location points from the M location points, to obtain M-N location points. Further, the target location point may be selected from the M-N location points according to a preset rule. The preset rule may be at least one of a distance rule and a stay duration rule.

For example, the preset rule is the distance rule. When the server determines that there are several location points that are close to each other in the M-N location points, a close distance may be that a quantity of location points in a preset area exceeds a preset quantity (that is, density is excessively high), the server may select a central location point of the several location points as the target location point, and discard location points other than the central location point in the several location points. For another example, the preset rule is the stay duration rule. The server may discard a location point that is in the M-N location points and whose stay duration of the target user is shorter than preset stay duration, and determine, as the target time point, a location point that is in the M-N location points and whose stay duration of the target user is not shorter than the preset stay duration. It may be understood that the method can reduce a quantity of location points, to reduce a calculation amount of subsequent calculation.

In some other embodiments, step S302 to step S304 may alternatively be performed by the terminal device. For example, if the terminal device stores the M location points, after obtaining the N location points, the terminal device may screen out the N location points from the M location points, to obtain the target location point. Further, the terminal device may send the obtaining request to the server, where the obtaining request includes the target location point. The server performs steps S305 to S307 below in response to the obtaining request.

**Step S305: The server determines the target landmark based on the target location point.**

In some embodiments, if a quantity of target location points is K, the server may determine W target landmarks based on the K target location points, where W is not greater than K, and both K and W are positive integers.

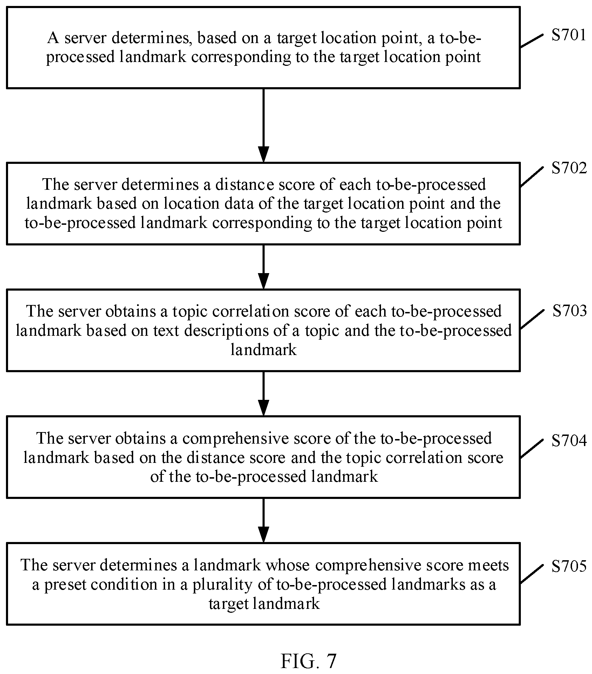

In an implementation, the server may first determine, for each target location point, a landmark whose distance from the target location point is not greater than a preset distance as a to-be-processed landmark corresponding to the target location point, and further determine the target landmark from the to-be-processed landmark corresponding to the target location point. For example, refer to following related descriptions in FIG. 7.

The landmark may be a POI. For example, the server may determine, from a POI location database 203, a POI whose distance from the target location point is not greater than the preset distance as the to-be-processed landmark. The POI location database 203 may include data of at least one POI. Data of one POI may include data such as a POI name, a POI category, a POI description, and a POI longitude and latitude. For example, a POI name is Huawei Cloud Building, a POI category of the Huawei Cloud Building is an office building, and a POI description is "located near the Tianlongsi Metro Station, a Huawei employee office building, including three buildings, and occupying an area of....". A longitude of the POI is 118.765977 and a latitude is 31.985097. The POI category may include a shopping mall, a residential building, a barber shop, a restaurant, a scenic spot, an office building, and the like.

Refer to FIG. 7. The following provides an example of a method for determining a target landmark based on a target location point.

**Step S701: The server determines, based on the target location point, the to-be-processed landmark corresponding to the target location point.**

In some embodiments, the server may determine a landmark whose distance from the target location point is not greater than the preset distance as the to-be-processed landmark corresponding to the target location point.

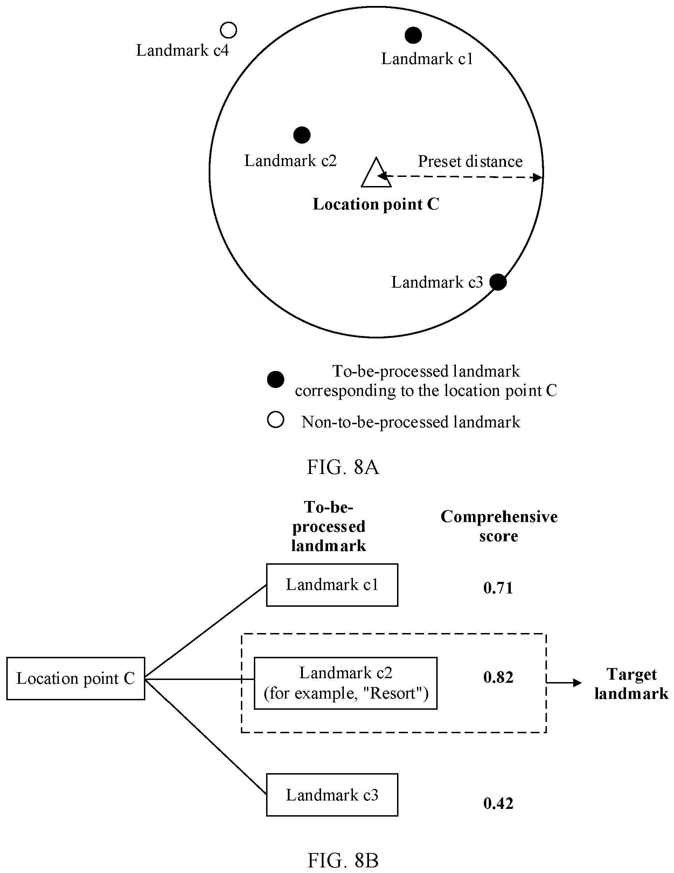

FIG. 8A is a diagram of determining the to-be-processed landmark according to an embodiment of this application. As shown in FIG. 8A, a triangle is used to represent a target location point in FIG. 8A. For example, a location point C is the target location point, and a dot represents a landmark. For example, landmarks around the location point C are shown. A black-edge black solid dot represents a to-be-processed landmark corresponding to the location point C, and a black-edge white solid dot represents a non-to-be-processed landmark. For example, the server may determine a target range by using the location point C as a center and the preset distance as a radius. As shown in FIG. 8A, it can be learned that the target range includes a landmark c1, a landmark c2, and a landmark c3. Further, the server may determine the landmark c1, the landmark c2, and the landmark c3 as to-be-processed landmarks corresponding to the location point C. FIG. 8A shows an example of a landmark c4 located outside the target range. Because a distance between the landmark c4 and the location point C exceeds the preset distance, the landmark c4 is not a to-be-processed landmark corresponding to the location point C, that is, a non-to-be-processed landmark.

In some other embodiments, when it is found that there is no landmark within a range that is not greater than the preset distance from the target location point, the server may discard the target location point, or may use a landmark closest to the target location point as the to-be-processed landmark.

**Step S702: The server determines a distance score of each to-be-processed landmark based on location data of the target location point and the to-be-processed landmark corresponding to the target location point.**

The location data may be longitude and latitude information, that is, a longitude and a latitude of the target location point and a longitude and a latitude of the to-be-processed landmark corresponding to the target location point. The distance score is used to represent a distance between the target location point and the to-be-processed landmark. For example, a larger distance between the target location point and the to-be-processed landmark corresponding to the target location point indicates a higher distance score.

In some embodiments, the server may calculate a distance between the target location point and each to-be-processed landmark based on longitude and latitude information of the target location point and each of the plurality of to-be-processed landmarks, and further calculate a distance score of each to-be-processed landmark based on the distance between the target location point and each to-be-processed landmark.

For example, the distance between the target location point and the to-be-processed landmark may be calculated according to the following formula 1:

$$\text{dist}(L_a,\ POI_b) = R * \arccos(\cos(\text{lat}(b)) * \cos(\text{lat}(a)) * \cos(\text{lon}(b) - \text{lon}(a)) +$$

$$\sin(\text{lat}(b)) * \sin(\text{lat}(a))\text{----Formula 1}$$

$L_a$ indicates a location point a, $POI_b$ indicates a location point b, and $\text{dist}(L_a, POI_b)$ indicates a distance between the location point a and the location point b. R indicates a radius of the earth, lon(b) indicates a longitude of a b POI, and lat(b) indicates a latitude of the b POI. lon(a) indicates a longitude of the location point a, and lat(a) indicates a latitude of the location point a.

For example, the target location point is the location point C, and the landmark c2 is a to-be-processed landmark of the location point. When calculating a distance between the location point C and the landmark c2, the server may substitute a longitude and a latitude of the location point C into the longitude and the latitude of the location point a in the formula 1, and substitute a longitude and a latitude of the landmark c2 into the longitude and the latitude of the location point b in the formula 1. The distance between the location point C and the landmark c2 may be obtained through calculation according to the formula 1.

For example, the distance score between the target location point and the to-be-processed landmark may be calculated according to the following formula 2:

$$\text{dist\_score}(L_a,\ POI_b) = \frac{1}{1+0.01*\text{dist}(L_a,\ POI_b)}\text{----Formula 2}$$

For meanings of parameters in the distance score formula, refer to the description of the formula 1. It can be learned from the formula 2 that a shorter distance between the target location point and the to-be-processed landmark indicates a higher distance score that is of the to-be-processed landmark and that is obtained through calculation according to the formula 2.

For example, as shown in FIG. 8A, the to-be-processed landmarks of the location point c whose distances from the location point c are in ascending order are sequentially the landmark c2, the landmark c1, and the landmark c3.

Therefore, the server calculates distance scores of the three to-be-processed landmarks according to the formula 1 and the formula 2. It can be learned that the three landmarks whose distance scores are in descending order are sequentially the landmark c2, the landmark c1, and the landmark c3.

It should be understood that the formula 1 and the formula 2 are formulas shown as examples. In this embodiment of this application, the distance score between the target location point and the to-be-processed landmark may alternatively be calculated according to another formula. This is not limited herein.

Step S703: The server obtains a theme correlation score of each to-be-processed landmark based on text descriptions of the theme and the to-be-processed landmark.

The theme correlation score is used to represent a degree of correlation between the to-be-processed landmark and the theme.

In some embodiments, the server may first convert, by using a text semantic sentence vector model (Sentence-BERT), the text description of the theme into a vector corresponding to the theme, for example, the vector corresponding to the theme may be denoted as Sentence-BERT (a); convert the text description of the to-be-processed landmark into a vector corresponding to the to-be-processed landmark, for example, the vector corresponding to the to-be-processed landmark may be denoted as Sentence-BERT (b); and further calculate the theme correlation score of the to-be-processed landmark based on a vector cosine similarity between the vector corresponding to the theme and the vector corresponding to the to-be-processed landmark and a category weight of a POI category of the to-be-processed landmark in the theme.

For example, the theme correlation score may be calculated according to the following formula 3:

$$\text{topic\_score}(T, \text{POI--}T_b) = w*\cos(\text{Sentence-Bert}(a), \text{Sentence-Bert}(b))\text{----Formula 3}$$

T indicates a theme (for example, a value "Travel" of the SharedTopic field in the obtaining request), $\text{POI - }T_b$ indicates a landmark b, and $\text{topic\_score}(T, \text{POI - }T_b)$ indicates a theme correlation score between the landmark b and the theme T.

w is a category weight of a POI category of the landmark b in the theme T, and w may be a preset value. For example, a value range of the preset value may be 0 to 1. In other words, w is the category weight of the POI category of the to-be-processed landmark in the theme. It should be noted that category weights of a same landmark in different themes may be different. For example, if the landmark c2 is a resort, and a POI category of the landmark c2 is a scenic spot, a weight of the landmark c2 in the theme "Travel" may be 0.9, and a weight of the landmark c2 in the theme "Office" may be 0.1.

For example, when calculating a theme correlation score between the landmark c2 (for example, the resort) and the theme (for example, Travel), the server may first convert a text description (that is, "Travel") of the theme into a vector by using the text semantic sentence vector model (Sentence-BERT), to obtain Sentence-BERT (a1); and convert a text description (that is, "Resort") of the landmark c2 is converted into a vector, to obtain Sentence-BERT (b1). The theme correlation score of the resort may be obtained by substituting the Sentence-BERT (a1), the Sentence-BERT (b1), and a category weight w1 of a POI category of the resort in the Travel into the formula 3.

Step S704: The server obtains a comprehensive score of the to-be-processed landmark based on the distance score and the theme correlation score of the to-be-processed landmark.

In some embodiments, the server may calculate the comprehensive score of the to-be-processed landmark according to the following formula 4:

$$\text{Score}(L_a, \text{POI}_b) = \alpha*\text{dist\_score}(L_a, \text{POI}_b) + (1-\alpha)*\text{----Formula 4}$$

$\alpha$ is a weight of the distance score, $\alpha$ may be a predefined value, and a value range of $\alpha$ is 0 to 1, for example, 0.6. For other parameters, refer to the foregoing related descriptions.

For example, when calculating a comprehensive score of the landmark c2, the server substitutes the distance score, obtained through calculation in step S702, between the landmark c2 and the target location point C2 into $\text{dist}(L_a, \text{POI}_b)$ in the formula 4, and substitutes the theme correlation score, obtained through calculation in step S703, between the landmark c2 and the theme into $\text{topic\_score}(T, \text{POI - }T_b)$ in the formula 4, so that the comprehensive score of the landmark c2 can be obtained through calculation.

In some other embodiments, the server may further determine a time score of the to-be-processed landmark based on a stay time of the target user at the to-be-processed landmark. Further, the server obtains the comprehensive score of the to-be-processed landmark based on the distance score, the theme correlation score, and the time score of the to-be-processed landmark.

The server may convert the stay time into a time score T according to a preset rule. For example, the server may determine a time score of a to-be-processed landmark whose stay time of the target user is within 0 to 5 minutes as 0, determine a time score of a to-be-processed landmark whose stay time is within 5 to 60 minutes as 0.5, and determine a time score of a to-be-processed landmark whose stay time exceeds 60 minutes as 0.8 or 1.

Further, the server may calculate the comprehensive score of the to-be-processed landmark according to the following formula 5:

$$\text{Score}(L_a, \text{POI}_b) = \alpha \times \text{dis}_{\text{score}(L_a, \text{POI}_b)} + \beta\text{theme}_{\text{score}(T, \text{POI}-T_b)} + \delta T \text{----Formula 5}$$

A sum of $\alpha$, $\beta$, and $\delta$ may be 1, $\alpha$ is a weight of the distance score, $\beta$ is a weight of the theme correlation score, and $\delta$ is a weight of the time score T. For example, $\delta$ may be less than $\alpha$ or $\beta$, and $\delta$ is 0.1. For other parameters, refer to the foregoing related descriptions.

A stay time of the user on a landmark may be a time difference between a moment at which the user stays on the landmark and a moment at which the user stays on a next landmark of the landmark, and the moment at which the user stays on the landmark may be a moment at which the user stays at a location point corresponding to the landmark. For example, a landmark whose comprehensive score meets a preset condition in a plurality of to-be-processed landmarks of a location point 1 is a landmark 1, a landmark whose comprehensive score meets a preset condition in a plurality of to-be-processed landmarks of a location point 2 is a landmark 2, and the target user passes through the location point 1 and then the location point 2. In this case, the server may calculate a time difference between a moment at which the target user is at the location point 1 and a moment at which the target user is at the location point 2, use the time difference as a stay time of the target user at the landmark 1, and determine the landmark 1 as the target landmark when the stay time meets preset duration.

**Step S705: The server determines a landmark whose comprehensive score meets a preset condition in the plurality of to-be-processed landmarks as the target landmark.**

In an implementation, the preset condition may be that the comprehensive score is greater than a preset threshold and the comprehensive score is the highest. In this case, after obtaining, through calculation, a comprehensive score of each of the plurality of to-be-processed landmarks corresponding to the target location point, the server may determine a to-be-processed landmark whose comprehensive score is greater than the preset threshold and whose comprehensive score is the highest in the plurality of to-be-processed landmarks as the target landmark.

For example, FIG. 8B is a diagram of determining a target landmark according to an embodiment of this application. As shown in FIG. 8B, to-be-processed landmarks of the location C include the landmark c1, the landmark c2, and the landmark c3, and comprehensive scores of the landmark c1, the landmark c2, and the landmark c3 obtained by the server through calculation are respectively 0.71, 0.82, and 0.42. The landmark c2 is a landmark with a highest comprehensive score in the to-be-processed landmarks. It is assumed that the preset threshold is 0.8. Because the comprehensive score of the landmark c2 is the highest and the comprehensive score of the landmark c2 exceeds the preset threshold 0.8, the server may determine the landmark c2 (for example, "Resort") as the target landmark.

In another implementation, the preset condition may be that the comprehensive score is greater than a preset threshold or the comprehensive score is the highest. In this case, the server may determine, as the target landmark, a landmark that is in the plurality of to-be-processed landmarks and that meets one of the following conditions: The comprehensive score is greater than the preset threshold and the comprehensive score is the highest. Alternatively, the server may determine that the target location point has no corresponding target landmark when the target location point has no to-be-processed landmark that meets the preset condition.

In some possible implementations, one target location point may correspond to a plurality of target landmarks. For example, when the preset condition is that the comprehensive score is greater than the preset threshold, assuming that the server determines that comprehensive scores of a plurality of landmarks in the to-be-processed landmarks corresponding to the target location point are greater than the preset threshold, the server may determine the plurality of landmarks as the target landmarks.

It should be noted that the preset condition is not limited in this embodiment of this application.

In some other embodiments, for each target location point, the server may select, from a plurality of to-be-processed landmarks of the target location point, a landmark whose comprehensive score meets the preset condition, to obtain a landmark set; further calculate a stay time of the target user at each landmark in the landmark set; and determine, as the target landmark, a landmark that is in the landmark set and whose stay time meets the preset duration.

**Step S306: The server obtains the image corresponding to the target landmark.**

In some embodiments, the server may obtain, from a POI material database 202, the image corresponding to the target landmark.

In an implementation, if the obtaining request includes an upper limit n of the quantity of images, the server may obtain, for each target landmark, n images corresponding to the target landmark from the POI material database 202. Herein, n is an integer greater than 0.

Optionally, the server may further obtain a POI name, a POI category, and a POI description of the target landmark from the POI material database 202. The POI material database 202 may include data of at least one POI. The data of one POI may include data such as a POI name, a POI category, and a POI description. For example, a POI name is Huawei Cloud Building, a POI category of the Huawei Cloud Building is an office building, and a POI description is "located near the Tianlongsi Metro Station, a Huawei employee office building, including three buildings, and occupying an area of....". A longitude of the POI is 118.765977 and a latitude is 31.985097. The POI category may include a shopping mall, a residential building, a barber shop, a restaurant, a scenic spot, an office building, and the like.

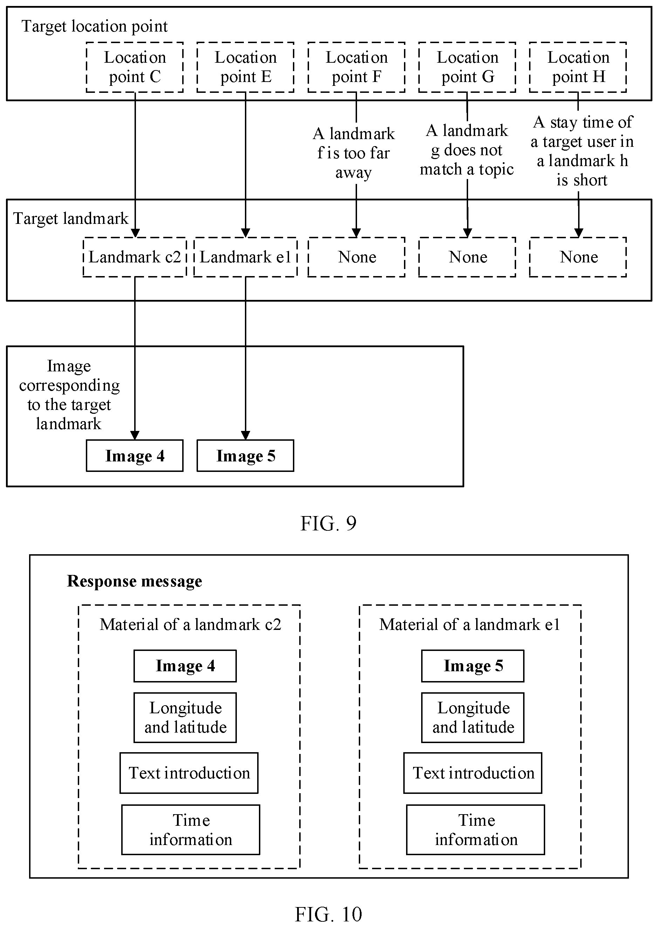

FIG. 9 is a diagram of determining the image corresponding to the target landmark according to an embodiment of this application.

FIG. 9 shows an example in which the target location points are a location point C, a location point E, and a location point F. It is assumed that a target landmark obtained by the server based on the location point C is a landmark c2, a target landmark obtained based on the location point E is a landmark e1, and no landmark that meets a requirement is obtained based on the location point F (for example, no landmark exists in a target range). The server may obtain an image (for example, an image 4) corresponding to the landmark c2 and an image (for example, an image 5) corresponding to the landmark e1. The image 4 and the image 5 are determined as images corresponding to the target landmarks. Quantities of images 4 and 5 may be at least one, or may be determined based on the upper limit of the quantity of images. For example, if n is 2, the image 4 includes two images related to the landmark c2, and the image 5 includes two images related to the landmark e2.

For example, as shown in FIG. 9, it is assumed that the target landmarks further include the location point F, a location point G, and a location point H. The location point F is compared with the location point C/E. Because a distance between a landmark f of the location point F and the location point F is long, a comprehensive score of the landmark f is low, and the comprehensive score of the landmark f is less than the preset threshold. Therefore, the location point F has no corresponding target landmark. The location point G is compared with the location point C/E. Because a landmark g of the location point G is inconsistent with the theme, a comprehensive score of the landmark g is low, and the comprehensive score of the landmark g is less than the preset threshold. Therefore, the location point G has no corresponding target landmark. The location point H is compared with the location point C/E. Because a stay time of the target user at the location point H is short, a comprehensive score of a landmark h corresponding to the location point H is low, and the comprehensive score of the landmark h is less than the preset threshold. Therefore, the location point H has no corresponding target landmark.

**Step S307: The server sends a response message to the terminal device, where the response message includes the image corresponding to the target landmark.**

Optionally, the response message may further include location data (for example, longitude and latitude information) corresponding to the target landmark, a text introduction to the target landmark, time information of the target landmark, and the like. The text introduction may be the POI name of the target landmark and the POI description of the target landmark. The time information of the target landmark may be a happen time of the target user at the target location point corresponding to the target landmark.

FIG. 10 is a diagram of a response message according to an embodiment of this application.

As shown in FIG. 10, it is assumed that target landmarks determined by the server include the landmark c2 and the landmark e1. The response message may include a material of the landmark c2 and a material of the landmark e1. The material of the landmark c2 may include the image 4, a longitude and a latitude of the landmark c2, a text introduction, and time information. The material of the landmark e1 may include the image 5, a longitude and a latitude of the landmark e1, a text introduction, and time information. For example, as shown in FIG. 9, it is assumed that the landmark c2 and the landmark e1 are obtained based on the location point C and the location point E shown in FIG. 9. The time information of the landmark c2 may be a happen time of the target user at the location point C, and the time information of the landmark e1 may be a happen time of the target user at the location point E.

Step S308: The terminal device synthesizes the image captured in the target time period from the locally stored images and the image corresponding to the target landmark, to obtain an image set.

In some embodiments, the terminal device may determine, according to a time sequence, an arrangement sequence of the image captured in the target time period from the locally stored images and the image corresponding to the target landmark; and further synthesize the image set based on the arrangement sequence. The image set may be a collage or a video, and the arrangement sequence is used to determine a location sequence of the images in the collage and the video. It may be understood that the location sequence of the images in the video is a play sequence of the images in the video.

For example, the terminal device may obtain a shooting time of an image captured in the target time from the locally stored images and the time information of the target landmark carried in the response message, and arrange the shooting time and the time information in a time sequence, to obtain an arrangement sequence of the images.

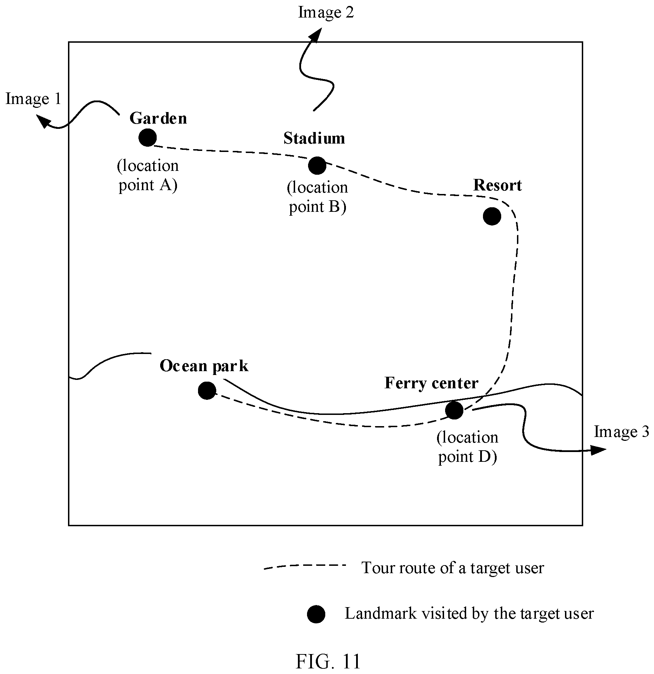

The following uses a scenario shown in FIG. 11 as an example for description.

FIG. 11 is a road map of a target user according to an embodiment of this application. As shown in FIG. 11, a dashed line is used to represent a tour route of the target user, and a black dot is used to represent a landmark of the tour of the target user. It can be learned that the target user sequentially passes through a garden, a stadium, a resort, a ferry center, and an ocean park in the target time period. The target user captures an image 1 by using the terminal device at a location point A when visiting the garden, captures an image 2 by using the terminal device at a location point B when visiting the stadium, and captures an image 3 by using the terminal device at a location point D when visiting the ferry center. No image is captured in the resort and the ocean park. Therefore, images captured in the target time period from the locally stored images in the terminal device include the image 1, the image 2, and the image 3.

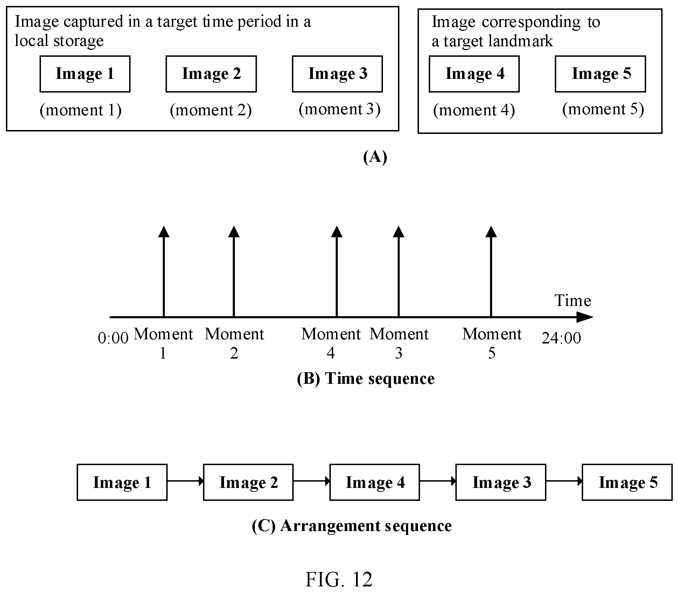

Refer to (A) in FIG. 12. It is assumed that a moment at which the target user captures the image 1 is a moment 1, a moment at which the target user captures the image 2 is an image 2, and a moment at which the target user captures the image 3 is a moment 3. The images corresponding to the target landmarks in the response message received by the terminal device are the image 4 and the image 5. The image 4 is an image of the resort in FIG. 11, and time information of the image 4 is a moment 4. The image 5 is a photo of the ocean park in FIG. 11, and time information of the image 5 is a moment 5. The foregoing five moments are moments of a same day.

Further, the terminal device may determine a sequence of the foregoing five moments according to a time sequence from morning to night of the day. It is assumed that the time sequence of the five moments arranged by the terminal device is shown in (B) in FIG. 12. The time sequence of the five moments is sequentially the moment 1, the moment 2, the moment 4, the moment 3, and the moment 5. Further, the terminal device may determine an arrangement sequence of the five images according to the time sequence of the five moments. As shown in (C) in FIG. 12, the terminal device may determine that the arrangement sequence of the five images is the image 1, the image 2, the image 4, the image 3, and the image 5.

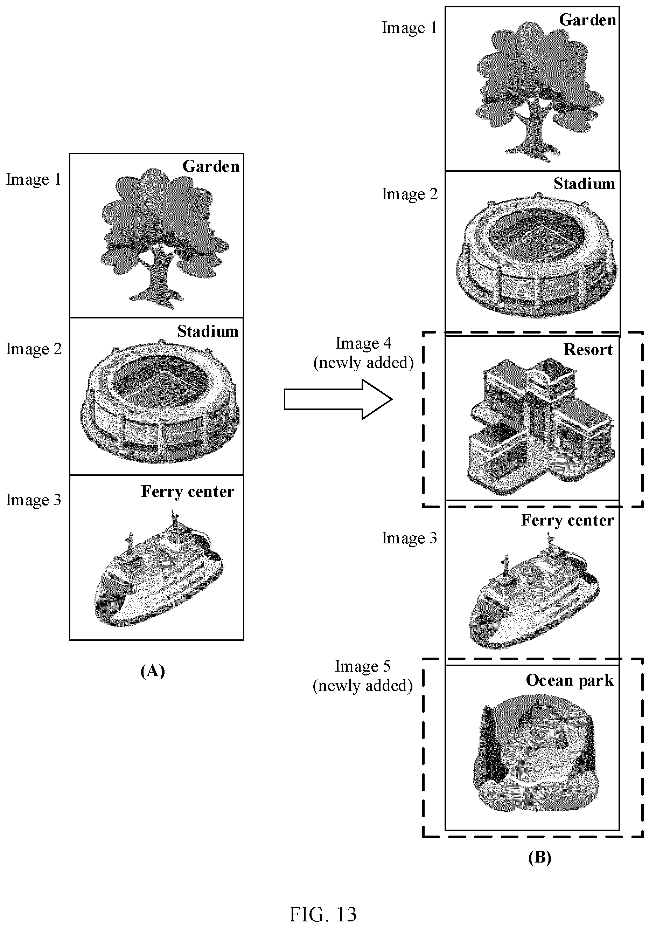

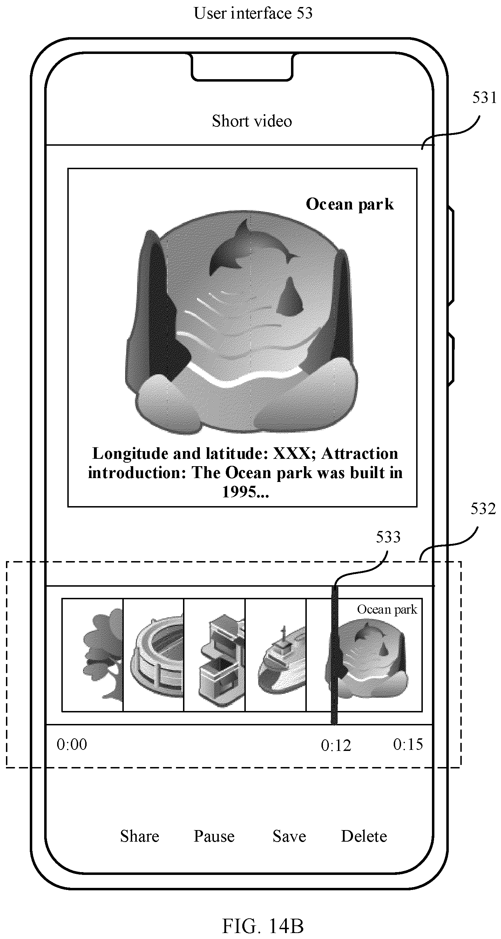

Further, the terminal device may synthesize the five images into a collage or a video according to the arrangement sequence. For example, the collage obtained by synthesizing the five images may be shown in (B) in FIG. 13, and the video obtained by synthesizing the five images may be shown in FIG. 14B.

FIG. 13 is a diagram of comparison between collages according to an embodiment of this application.

In some embodiments, the target user does not enable the function corresponding to the landmark add control 514 in the user interface 51. When detecting a user operation performed on the generation control 516, the terminal device may, in response to the user operation, splice the images (that is, the image 1, the image 2, and the image 3) that are captured in the target time period from the locally stored images, to obtain a collage shown in (A) in FIG. 13. The collage does not include images of the resort and the ocean park visited by the target user.

In some other embodiments, the target user enables the function corresponding to the landmark add control 514 in the user interface 51. When detecting a user operation performed on the generation control 516, the terminal device may send the obtaining request to the server in response to the user operation. When determining that the target landmarks are a resort (for example, the landmark c2) and an ocean center (for example, the landmark e1), the server may send an image (for example, the image 4) of the resort and an image (for example, the image 5) of the ocean center to the terminal device. In this case, the terminal device may splice the image 1, the image 2, the image 3, the image 4, and the image 5 according to the time sequence, to obtain the collage shown in (B) in FIG. 13. The collage includes images of the resort and the ocean park visited by the target user.

Optionally, before synthesizing the image set, the terminal device may edit the image captured in the target time period from the locally stored images and the image corresponding to the target landmark, for example, add, to the image, a landmark name, a text introduction, and the like of the target landmark corresponding to the image. Further, an image set is generated based on the edited image. The image in the image set may include a landmark name (namely, a POI name) of a target landmark corresponding to the image, a text introduction, location data (for example, longitude and latitude information), time information, and the like. Time information of the locally stored image in the image set may be a shooting time. Time information of the image corresponding to the target landmark in the image set may be a happen time of the target user at a location point corresponding to the target landmark. For example, the terminal device may add a POI name of each image in the image set. As shown in FIG. 13, a landmark name is displayed in an upper right corner of each image in the image set.

It should be noted that FIG. 13 is described by using an example in which one location point corresponds to one image.

In another embodiment, one location point may correspond to a plurality of images. In this case, when generating the image set, the terminal device may group images based on locations, and determine an arrangement sequence of the images in the image set based on the groups. For example, FIG. 11 is used as an example. The terminal device may determine images captured at the location point A as a group A, determine images captured at the location point B as a group B, determine images whose landmark is the resort as a group C, determine images captured at the location point D as a group D, and determine images whose landmark is the resort as a group E. Further, when generating the image set, the terminal device may set locations of images in a same group in the image set to be in front or behind.

For example, the image set may alternatively be a road map. The road map may include a target landmark that the terminal device passes through in the target time period and information about a landmark corresponding to a locally captured image. The information may include content like an image, a landmark name, or a text introduction.

For example, the image set may be the road map shown in FIG. 11. As shown in FIG. 11, the dashed line is used to represent the tour route of the target user, and the black dot is used to represent the landmark of the tour of the target user. The image 1 corresponding to the location point A, the image 2 corresponding to the location point B, and the image 3 corresponding to the location point D are images from the locally stored images in the terminal device. Landmark names, images, and time information of the resort and the ocean park may be sent by the server to the terminal device. The terminal device may generate, based on the shooting times of the image 1, the image 2, and the image 3, and the time information corresponding to the resort and the ocean park, the tour route of the target user shown in FIG. 11; and obtain landmarks corresponding to the location point A, the location point B, and the location point D from the server, and determine that the landmark corresponding to the location point A is the garden, the landmark corresponding to the location point B is the stadium, and the landmark corresponding to the location point D is the ferry center. Further, the terminal device may generate landmark names on the tour route. Optionally, the terminal device may display an image of a landmark image near the landmark, for example, display a thumbnail of the image 1 near the garden. Alternatively, when receiving an operation of tapping the landmark by the user, the terminal device displays the image of the landmark. For example, when receiving a tap operation of the user for the garden, the terminal device displays the image 1 near the garden.

**Step S309: The terminal device displays the image set.**

In some embodiments, after generating the image set, the terminal device may display the image set.

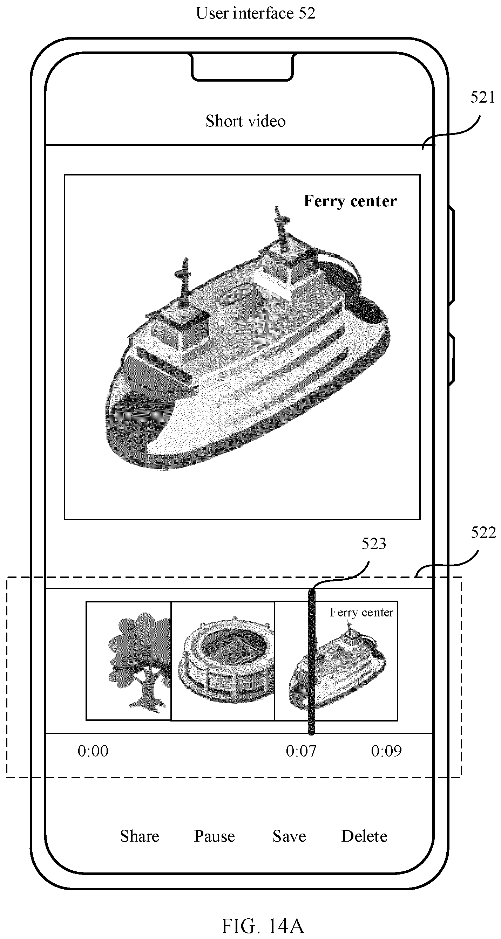

FIG. 14A and FIG. 14B show examples of some user interfaces for displaying an image set by the terminal device according to an embodiment of this application.

FIG. 14A shows an example of a user interface 52 in which the terminal device displays the image set when the terminal device does not enable the function corresponding to the landmark add control 514 in the user interface 51. As shown in FIG. 14A, the user interface 52 includes a display bar 521, a progress bar 522, and a progress indicator 523. The display bar 521 is used to display a video, and the video is a video generated based on the image from the locally stored images. The progress bar 522 and the progress indicator 523 are used to display a video progress. As shown in FIG. 14A, the video includes only images from the locally stored images, that is, the image 1, the image 2, and the image 3, and does not include the image (the image 4) of the resort visited by the target user and the image (the image 5) of the ocean park visited by the target user.

FIG. 14B shows an example of a user interface 53 when the terminal device enables the function corresponding to the landmark add control 514 in the user interface 51. As shown in FIG. 14B, the user interface 53 includes a display bar 531, a progress bar 532, and a progress indicator 533. The display bar 531 is used to display a video, and the video is a video generated based on images (such as the image 1, the image 2, and the image 3) from the locally stored images and images (such as the image 4 and the image 5) corresponding to the target landmark. The progress bar 532 and the progress indicator 533 are used to display a video progress. An arrangement sequence of the images in the video may be determined according to a time sequence. For details, refer to the foregoing related content in FIG. 12.

As shown in FIG. 14B, content such as a landmark name, longitude and latitude information, and a text introduction that correspond to the image may be displayed on the image in the video.

Optionally, the terminal device may further display a set before a landmark is newly added. For example, the terminal device may display (A) shown in FIG. 13 and (B) shown in FIG. 13 on a same interface. (A) shown in FIG. 13 is the set before the landmark is newly added, and (B) shown in FIG. 13 is the image set.

It should be noted that, in this embodiment of this application, duration in which each frame of image of the video appears, a transition manner, and the like are not limited.

In some other embodiments, the terminal device may further display an edit control on the interface for displaying the image set. Further, in response to a user operation performed on the edit control, the terminal device may process the images in the image set, for example, delete some images from the image set, add a text to the image, adjust a location sequence of the images in the image set, or the like. This is not limited in this embodiment of this application.

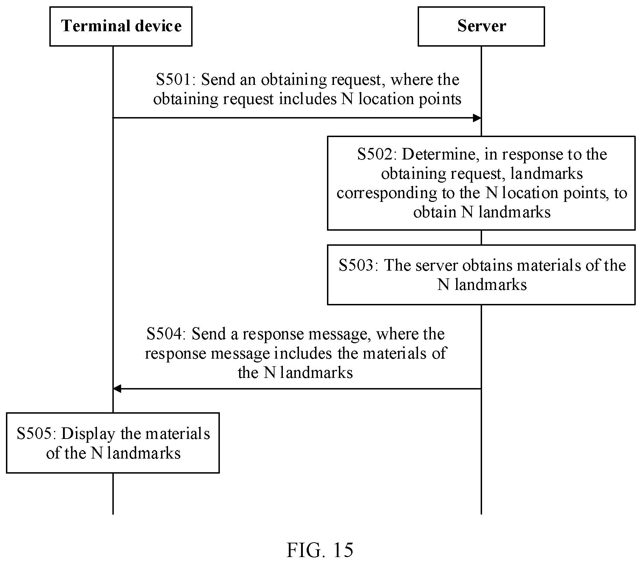

In this embodiment of this application, the terminal device may further obtain a material of an image captured in the target time period during local processing. FIG. 15 is a flowchart of a method for obtaining materials of N location points according to an embodiment of this application. The method includes the following steps.

**Step S501: A terminal device sends an obtaining request to a server, where the obtaining request includes N location points.**

The N location points may be shooting locations corresponding to all images captured in a target time period. For a method for obtaining the N location points, refer to related content in step S301. The N location points may be shooting locations of images whose shooting times are in the target time period from the locally stored images in the terminal device, for example, the location point A, the location point B, and the location point D shown in FIG. 5.

Optionally, the obtaining request in step S501 and the obtaining request in step S302 are two independent pieces of request information. Optionally, the obtaining request and the obtaining request in step S302 are sent to the terminal device through a same message. In other words, after receiving the obtaining request, the server performs the foregoing step S302 to step S307 and the following step S502 to step S504.

**Step S502: The server determines, in response to the obtaining request, landmarks corresponding to the**

**N location points, to obtain N landmarks.**

For a method for determining the N landmarks by the server, refer to related content in step S305. Herein, an example in which each of the N location points has a corresponding landmark is used for description. In this case, a quantity of landmarks corresponding to the N location points is N. For example, if the N location points are the location point A, the location point B, and the location point D shown in FIG. 5, the server determines, based on the location point A, the location point B, and the location point D, a landmark corresponding to each location. It is assumed that landmarks corresponding to the location point A, the location point B, and the location point D are shown in FIG. 11. To be specific, a landmark corresponding to the location point A is a garden, a landmark corresponding to the location point B is a stadium, and a landmark corresponding to the location point D is a ferry center. In this case, the server may obtain three landmarks, and the three landmarks are respectively the garden, the stadium, and the ferry center.

In some other embodiments, when the server determines that there is a location point that has no corresponding landmark in the N location points, a quantity of landmarks obtained by the server is less than N. For example, the server determines a landmark whose distance from a location point is less than a threshold as a landmark corresponding to the location point. When there is no landmark whose distance from the location point is less than the threshold, the server may determine that the location point has no corresponding landmark.

**Step S503: The server obtains materials of the N landmark.**

For a method for obtaining the images corresponding to the N landmarks by the server, refer to related content in step S306. For example, if the materials of the N landmarks are the garden, the stadium, and the ferry center, the server may obtain a material corresponding to the garden, a material corresponding to the stadium, and a material corresponding to the ferry center, to obtain the materials of the N landmark.

Optionally, the material may include a longitude and a latitude, a text introduction, time information of the landmark, and the like. This is not limited herein.

**Step S504: The server sends a response message to the terminal device, where the response message includes the materials of the N landmarks.**

The response request in step S504 and the response request in S307 are two pieces of independent request information. Optionally, the two pieces of independent request information are sent to the terminal device through a same message.

**Step S505: The terminal device displays the materials of the N landmarks.**

In some embodiments, after receiving the materials of the N landmarks, the terminal device may add, through editing, the materials of the N landmarks to images corresponding to the landmarks, and further display the edited images. For example, the N location points include the location point A. As shown in FIG. 5, the location point A is a shooting location of an image 1. When the terminal device receives a material that is of the landmark (for example, the garden shown in FIG. 11) corresponding to the location point A and that is sent by the server, the terminal device may add the material of the garden to the image 1 through editing, and then display the edited image 1. The edited image 1 includes the image 1 and the material of the garden. The material of the garden may include a longitude and a latitude of the garden, a text introduction of the garden, and the like.

It should be noted that the method shown in FIG. 5 may be an independent embodiment, or may be combined with the method shown in FIG. 3 to complete an embodiment.

When the method shown in FIG. 5 is a separate embodiment, the terminal device may edit the images from the locally stored images based on the materials of the N landmark sent by the server, where the materials may include a landmark name, a landmark introduction, and the like; and further synthesize the edited images into an image set. For example, the material is the landmark name, and the image set is a collage. Refer to (A) in FIG. 13. An image 1 corresponding to a location A, an image 2 corresponding to a location B, and an image 3 corresponding to a location D are images from the locally stored images in the terminal device. When obtaining that the landmark corresponding to the location A is the garden, a landmark corresponding to the location B is the stadium, and a landmark corresponding to the location D is the ferry center, the terminal device may add Garden to the image 1 through editing, add Stadium to the image 2 through editing, and add Ferry center to the image 3 through editing, and then synthesize the edited image 1, the edited image 2, and the edited image 3 to obtain the collage shown in (A) in FIG. 13.

When the method shown in FIG. 5 and the method shown in FIG. 3 are combined to complete an embodiment, the terminal device may edit, based on the materials of the N landmarks sent by the server, the images from the locally stored images; edit, based on a material of a target landmark sent by the server, an image corresponding to the target landmark; and synthesize the edited images into an image set. The material may include a landmark name, a landmark introduction, and the like. For example, the material is the landmark name, and the image set is a collage. Refer to (B) in FIG. 13. An image 1, an image 2, and an image 3 are edited images from the locally stored images. An image 4 and an image 5 are edited images corresponding to target landmarks. It can be learned that landmark names are added to upper right corners of the image 1 to the image 5 through editing.

An embodiment of this application further provides an electronic device. The electronic device includes one or more processors and one or more memories, the one or more memories are coupled to the one or more processors, the one or more memories are configured to store computer program code, the computer program code includes computer instructions, and when the one or more processors execute the computer instructions, the electronic device is enabled to perform the method described in the foregoing embodiments.

An embodiment of this application further provides a computer program product including instructions. When the computer program product runs on an electronic device, the electronic device is enabled to perform the method described in the foregoing embodiments.

An embodiment of this application further provides a computer-readable storage medium, including instructions. When the instructions are run on an electronic device, the electronic device is enabled to perform the method described in the foregoing embodiments.

It can be understood that the various implementations of this application may be arbitrarily combined to achieve different technical effect.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

In summary, what is described above is merely embodiments of the technical solutions of this application, but is not intended to limit the protection scope of this application. Any modification, equivalent substitution, and improvement made based on the disclosure of this application shall fall within the protection scope of this application.

**Claims**

1. An image processing method, wherein the method comprises:

    obtaining, by a terminal device, a target time period in response to a user operation;
    obtaining, by the terminal device, an image captured in the target time period, to obtain a first image set;
    obtaining, by the terminal device, location information of the image in the first image set;
    obtaining, by the terminal device, location information of the terminal device in the target time period, wherein the location information of the terminal device comprises a first location point, and the location information of the image does not comprise the first location point;
    obtaining, by the terminal device, a second image set, wherein the second image set comprises a first image corresponding to the first location point;
    generating, by the terminal device, a third image set, wherein the third image set comprises the image in the first image set and an image in the second image set; and
    displaying, by the terminal device, the third image set.

2. The method according to claim 1, wherein the first image set comprises a second image corresponding to a second location point, the location information of the image comprises the second location point, and the method further comprises:

    determining, by the terminal device, time information of the first image based on time information of the first location point; and
    determining, by the terminal device, time information of the second image based on time information of the second location point; and
the generating, by the terminal device, a third image set comprises:
generating, by the terminal device, the third image set based on the time information of the first image and the time information of the second image.

3. The method according to claim 2, wherein the time information of the first image is before the time information of the second image, and a location of the first image is before a location of the second image in the third image set.

4. The method according to any one of claims 1 to 3, wherein the third image set is a collage or a video.

5. The method according to any one of claims 1 to 4, wherein the first image is a landmark image corresponding to the first location point.

6. The method according to any one of claims 1 to 5, wherein the method further comprises:

   obtaining, by the terminal device, a first material corresponding to the first location point, wherein the first material comprises at least one of a landmark name, a text introduction, and geographic information; and
   the generating, by the terminal device, a third image set comprises:
   generating, by the terminal device, the third image set based on the image in the first image set, the image in the second image set, and the first material.

7. The method according to any one of claims 1 to 6, wherein the location information of the image comprises a third location point, and the method further comprises:

   obtaining, by the terminal device, a second material corresponding to the third location point, wherein the second material comprises at least one of a landmark image, a landmark name, a text introduction, and geographic information; and
   the generating, by the terminal device, a third image set comprises:
   generating, by the terminal device, the third image set based on the image in the first image set, the image in the second image set, and the second material.

8. The method according to any one of claims 1 to 7, wherein the method further comprises:

   editing, by the terminal device, an image in the third image set in response to a user operation on the third image set; and
   displaying, by the terminal device, the edited third image set.

9. The method according to any one of claims 1 to 8, wherein the obtaining a second image set comprises:

   sending, by the terminal device, an obtaining request to a server, wherein the obtaining request comprises the location information of the image and indication information indicating the target time period; and
   receiving, by the terminal device, a response message sent by the server, wherein the response message comprises the second image set.

10. The method according to any one of claims 1 to 9, wherein the method further comprises:
    determining, by the terminal device, a theme of the second image set based on a user operation of theme selecting, wherein the first image is associated with the theme.

11. The method according to any one of claims 1 to 10, wherein the first image is an image corresponding to a first landmark, the first landmark is determined based on a distance between the first location point and at least one landmark, and the at least one landmark comprises the first landmark.

12. The method according to any one of claims 1 to 11, wherein the first image is the image corresponding to the first landmark, the first landmark is determined based on a stay time of the terminal device at at least one location point, and the at least one location point comprises the first location point.

13. An image processing method, wherein the method comprises:

receiving, by a server, an obtaining request sent by a terminal device, wherein the obtaining request comprises location information of an image in a first image set and indication information indicating a target time period, and the first image set comprises an image captured by the terminal device in the target time period;

obtaining, by the server, location information of the terminal device in the target time period, wherein the location information of the terminal device comprises a first location point, and the location information of the image does not comprise the first location point;

obtaining, by the server, a second image set based on the location information of the terminal device, the indication information, and the location information of the image; and

sending, by the server, the second image set to the terminal device, wherein the second image set comprises a first image corresponding to the first location point, and the second image set is used to be combined with the first image set to synthesize a third image set.

14. The method according to claim 13, wherein the method further comprises:

determining, by the server, time information of the first image based on time information of the terminal device at the first location point; and

sending, by the server, the time information of the first image to the terminal device.

15. The method according to claim 13 or 14, wherein the second image set comprises a first material corresponding to the first location point, and the method further comprises:

determining, by the server, a first landmark based on the first location point;

obtaining, by the server, a material corresponding to the first landmark, to obtain the first material corresponding to the first image, wherein the first material comprises at least one of a landmark name, a text introduction, and geographic information; and

sending, by the server, the first material to the terminal device, wherein the third image set is generated based on the image in the first image set, an image in the second image set, and the first material.

16. The method according to any one of claims 13 to 15, wherein the location information of the image comprises a second location point, and the method further comprises:

determining, by the server, a second landmark based on the second location point;

obtaining, by the server, a material corresponding to the second landmark, to obtain a second material corresponding to the second location point, wherein the second material comprises at least one of a landmark image, a landmark name, a text introduction, and geographic information; and

sending, by the server, the second material to the terminal device, wherein the third image set is generated based on the image in the first image set, the image in the second image set, and the second material.

17. The method according to any one of claims 13 to 16, wherein the obtaining request comprises a theme of the second image set, and the obtaining a second image set comprises:

determining, by the server, at least one landmark based on the first location point;

determining, by the server, the first landmark from the at least one landmark based on at least one of an association relationship between the theme and the at least one landmark, a distance between the first location point and the at least one landmark, and a stay time of the terminal device at the first location point; and

obtaining, by the server, an image corresponding to the first landmark, to obtain the first image.

18. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 17.

19. A computer program product comprising instructions, wherein when the computer program product runs on an electronic device, the electronic device is enabled to perform the method according to any one of claims 1 to 17.

20. A computer-readable storage medium, comprising instructions, wherein when the instructions are run on an electronic device, the electronic device is enabled to perform the method according to any one of claims 1 to 17.

21. An image processing system, wherein the image processing system comprises a terminal device and a server, the terminal device is configured to perform the method according to any one of claims 1 to 12, and the server is configured to perform the method according to any one of claims 13 to 17.

Server 20

Terminal device 10

FIG. 1

Electronic device 100

FIG. 2A

| Application layer | Message push module | | Camera | Calendar | |
| --- | --- | --- | --- | --- | --- |
| | Gallery | Phone | WLAN | Music | Video | ... |

| Application framework layer | Window manager | Content provider | Phone manager | Resource manager |
| --- | --- | --- | --- | --- |
| | Notification manager | View system | ... | |

| System library | Surface manager | Three-dimensional graphics processing library | Android runtime |
| --- | --- | --- | --- |
| | Two-dimensional graphics engine | Media library | ... | |

| Kernel layer | Display driver | Camera driver | |
| --- | --- | --- | --- |
| | Audio driver | Sensor driver | ... |

FIG. 2B

| **Terminal device** | **Server** |
|---|---|

S301: Obtain, in response to a first user operation, an image captured in a target time period from locally stored images, and determine N location points, where N is an integer not less than 0

S302: Send an obtaining request, where the obtaining request includes indication information of the target time period

S303: Obtain, in response to the obtaining request, M location points that a target user passes through in the target time period, where M is an integer not less than N

S304: Screen out the N location points from the M location points, to obtain a target location point

S305: Determine a target landmark based on the target location point

S306: Obtain an image corresponding to the target landmark

S307: Send a response message, where the response message includes the image corresponding to the target landmark

S308: Synthesize the image captured in the target time period from the locally stored images and the image corresponding to the target landmark, to obtain an image set

S309: Display the image set

FIG. 3

User interface 50

FIG. 4A

User interface 51

FIG. 4B

Locally stored images in a terminal device

Image captured in a target time period:

| Image 1 | Image 2 | Image 3 |
| :---: | :---: | :---: |
| (location point A) | (location point B) | (location point D) |

FIG. 5

User location database

Location point that a target user passes through in a target time period:
Location point A/B/C/D/E/F

Obtaining request

Location point A
Location point B
Location point D

Target location points: **the location point C, the location point E, and the location point F**

FIG. 6

A server determines, based on a target location point, a to-be-processed landmark corresponding to the target location point — S701

The server determines a distance score of each to-be-processed landmark based on location data of the target location point and the to-be-processed landmark corresponding to the target location point — S702

The server obtains a topic correlation score of each to-be-processed landmark based on text descriptions of a topic and the to-be-processed landmark — S703

The server obtains a comprehensive score of the to-be-processed landmark based on the distance score and the topic correlation score of the to-be-processed landmark — S704

The server determines a landmark whose comprehensive score meets a preset condition in a plurality of to-be-processed landmarks as a target landmark — S705

FIG. 7

Landmark c4

Landmark c1

Landmark c2

Preset distance

**Location point C**

Landmark c3

To-be-processed landmark
corresponding to the location point C

Non-to-be-processed landmark

FIG. 8A

| To-be-processed landmark | Comprehensive score |
|---|---|
| Landmark c1 | 0.71 |

Location point C

| Landmark c2 (for example, "Resort") | 0.82 | **Target landmark** |
|---|---|---|

| Landmark c3 | 0.42 |
|---|---|

FIG. 8B

Target location point

| Location point C | Location point E | Location point F | Location point G | Location point H |

A landmark f is too far away

A landmark g does not match a topic

A stay time of a target user in a landmark h is short

Target landmark

| Landmark c2 | Landmark e1 | None | None | None |

Image corresponding to the target landmark

**Image 4** **Image 5**

FIG. 9

**Response message**

Material of a landmark c2

**Image 4**

Longitude and latitude

Text introduction

Time information

Material of a landmark e1

**Image 5**

Longitude and latitude

Text introduction

Time information

FIG. 10

Image 2

Image 1

**Garden**

(location
point A)

**Stadium**

(location
point B)

**Resort**

**Ocean park**

**Ferry center**

(location
point D)

Image 3

‒ ‒ ‒ ‒ ‒ ‒ Tour route of a target user

● Landmark visited by the target user

FIG. 11

| Image captured in a target time period in a local storage | | | Image corresponding to a target landmark | |
|---|---|---|---|---|
| **Image 1** | **Image 2** | **Image 3** | **Image 4** | **Image 5** |
| (moment 1) | (moment 2) | (moment 3) | (moment 4) | (moment 5) |

**(A)**

0:00 | Moment 1 | Moment 2 | Moment 4 | Moment 3 | Moment 5 | Time 24:00

**(B) Time sequence**

| **Image 1** | → | **Image 2** | → | **Image 4** | → | **Image 3** | → | **Image 5** |
|---|---|---|---|---|---|---|---|---|

**(C) Arrangement sequence**

FIG. 12

Image 1

Garden

Image 2

Stadium

Image 3

Ferry center

(A)

Image 1

Garden

Image 2

Stadium

Image 4
(newly added)

Resort

Image 3

Ferry center

Image 5
(newly added)

Ocean park

(B)

FIG. 13

User interface 52

FIG. 14A

User interface 53

FIG. 14B

```
┌──────────────────┐                              ┌──────────────────┐
│  Terminal device │                              │      Server      │
└──────────────────┘                              └──────────────────┘
         │                                                  │
         │    S501: Send an obtaining request, where the    │
         │      obtaining request includes N location points│
         │─────────────────────────────────────────────────▶│
         │                                        ┌──────────────────────────────┐
         │                                        │ S502: Determine, in response  │
         │                                        │    to the obtaining request,  │
         │                                        │   landmarks corresponding to  │
         │                                        │  the N location points, to    │
         │                                        │       obtain N landmarks      │
         │                                        └──────────────────────────────┘
         │                                        ┌──────────────────────────────┐
         │                                        │ S503: The server obtains      │
         │                                        │ materials of the N landmarks  │
         │                                        └──────────────────────────────┘
         │   S504: Send a response message, where the       │
         │   response message includes the materials of     │
         │             the N landmarks                      │
         │◀─────────────────────────────────────────────────│
┌──────────────────────────┐                               │
│ S505: Display the materials│                              │
│    of the N landmarks      │                              │
└──────────────────────────┘                               │
         │                                                  │
```

FIG. 15

## INTERNATIONAL SEARCH REPORT

| International application No. |
| --- |
| **PCT/CN2023/135798** |

| A. | CLASSIFICATION OF SUBJECT MATTER |
| --- | --- |

G06F16/587(2019.01)i; G06T11/60(2006.01)i; H04M1/72439(2021.01)i

According to International Patent Classification (IPC) or to both national classification and IPC

| B. | FIELDS SEARCHED |
| --- | --- |

Minimum documentation searched (classification system followed by classification symbols)

IPC: G06F G06T H04M

Documentation searched other than minimum documentation to the extent that such documents are included in the fields searched

Electronic data base consulted during the international search (name of data base and, where practicable, search terms used)

CNTXT, ENTXT, DWPI, WPABS, CNKI: 合成, 生成, 制作, make, generate, composite, 拼图, collage, 视频, video, 获取, 请求, 收, acquire, request, receive, 位置, 经纬度, 定位, location, Latitude, longitude, 地标, 景点, 兴趣点, point of interest, landmark, 建筑物, POI, 图像, 图片, 照片, image, photo, picture, 缺, 少, 未, 没, lack, without, not, take, capture, 拍照

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112199547 A (GUANGDONG OPPO MOBILE COMMUNICATIONS CO., LTD.) 08 January 2021 (2021-01-08)<br>description, paragraphs 10 and 29-71 | 1-21 |
| A | CN 112052355 A (BEIJING DAJIA INTERNET INFORMATION TECHNOLOGY CO., LTD.) 08 December 2020 (2020-12-08)<br>entire document | 1-21 |
| A | JP 2016224658 A (HITACHI SOLUTIONS EAST JAPAN LTD.) 28 December 2016 (2016-12-28)<br>entire document | 1-21 |
| A | KR 20160087284 A (ELECTRONICS AND TELECOMMUNICATIONS RESEARCH INSTITUTE) 21 July 2016 (2016-07-21)<br>entire document | 1-21 |
| A | CN 109660940 A (SHANGHAI LINKSURE NETWORK TECHNOLOGY CO., LTD.) 19 April 2019 (2019-04-19)<br>entire document | 1-21 |

✓ Further documents are listed in the continuation of Box C.   ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 February 2024** | **27 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/135798** |

**C.**      **DOCUMENTS CONSIDERED TO BE RELEVANT**

| Category* | Citation of document, with indication, where appropriate, of the relevant passages | Relevant to claim No. |
|---|---|---|
| A | CN 113656615 A (GLOBAL SHUKE GROUP CO., LTD.) 16 November 2021 (2021-11-16) <br> entire document | 1-21 |
| A | KR 20170101697 A (JEJU NATIONAL UNIVERSITY INDUSTRY-ACADEMIC COOPERATION FOUNDATION) 06 September 2017 (2017-09-06) <br> entire document | 1-21 |

Form PCT/ISA/210 (second sheet) (July 2022)

**INTERNATIONAL SEARCH REPORT**
Information on patent family members

International application No.

**PCT/CN2023/135798**

| Patent document cited in search report | | | Publication date (day/month/year) | Patent family member(s) | | | Publication date (day/month/year) |
|---|---|---|---|---|---|---|---|
| CN | 112199547 | A | 08 January 2021 | None | | | |
| CN | 112052355 | A | 08 December 2020 | None | | | |
| JP | 2016224658 | A | 28 December 2016 | JP | 6544998 | B2 | 17 July 2019 |
| KR | 20160087284 | A | 21 July 2016 | None | | | |
| CN | 109660940 | A | 19 April 2019 | WO | 2020135037 | A1 | 02 July 2020 |
| CN | 113656615 | A | 16 November 2021 | None | | | |
| KR | 20170101697 | A | 06 September 2017 | None | | | |

Form PCT/ISA/210 (patent family annex) (July 2022)

# EP 4 614 352 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202211538437